# EUROPEAN PATENT SPECIFICATION

(11) **EP 4 528 601 B1**
(45) Date of publication and mention of the grant of the patent: **22.04.2026**
(21) Application number: 23934302.3
(22) Date of filing: 09.11.2023
(51) Int. Cl.: G06N 10/20, G06N 10/40, G06N 10/80, G06F 9/50

(54) **QUANTUM TASK EXECUTION METHOD AND APPARATUS, AND DEVICE AND STORAGE MEDIUM**
VERFAHREN UND VORRICHTUNG ZUR AUSFÜHRUNG VON QUANTENAUFGABEN SOWIE VORRICHTUNG UND SPEICHERMEDIUM
PROCÉDÉ ET APPAREIL D'EXÉCUTION DE TÂCHE QUANTIQUE, DISPOSITIF, ET SUPPORT DE STOCKAGE

(30) Priority: 04.08.2023 CN 202310977711
(43) Date of publication of application: 26.03.2025
(73) Proprietor: TENCENT TECHNOLOGY (SHENZHEN) COMPANY LIMITED, Shenzhen, Guangdong 518057 (CN)
(72) Inventor: ZHANG, Tianyu, Shenzhen, Guangdong 518057 (CN); ZHANG, Shengyu, Shenzhen, Guangdong 518057 (CN); ZHENG, Yicong, Shenzhen, Guangdong 518057 (CN); XU, Xiong, Shenzhen, Guangdong 518057 (CN); ZOU, Chenji, Shenzhen, Guangdong 518057 (CN)
(74) Representative: Novagraaf International SA
(86) International application number: PCT/CN2023/130724
(87) International publication number: WO 2025/030698

(56) References cited:
- CN-A- 109 690 505
- CN-A- 114 330 730
- CN-A- 116 187 457
- US-A1- 2019 220 301
- US-A1- 2020 184 025
- LEI LIU ET AL: "QuCloud+: A Holistic Qubit Mapping Scheme for Single/Multi-programming on 2D/3D NISQ Quantum Computers", ARXIV.ORG, CORNELL UNIVERSITY LIBRARY, 201 OLIN LIBRARY CORNELL UNIVERSITY ITHACA, NY 14853, 29 July 2022 (2022-07-29), XP091282672
- LIU LEI ET AL: "QuCloud: A New Qubit Mapping Mechanism for Multi-programming Quantum Computing in Cloud Environment", 2021 IEEE INTERNATIONAL SYMPOSIUM ON HIGH-PERFORMANCE COMPUTER ARCHITECTURE (HPCA), IEEE, 27 February 2021 (2021-02-27), pages 167 - 178, XP033905752, DOI: 10.1109/HPCA51647.2021.00024
- GUSHU LI ET AL: "Tackling the Qubit Mapping Problem for NISQ-Era Quantum Devices", ARXIV.ORG, CORNELL UNIVERSITY LIBRARY, 201 OLIN LIBRARY CORNELL UNIVERSITY ITHACA, NY 14853, 7 September 2018 (2018-09-07), XP081188515

## Description

This application claims priority to Chinese Patent Application No. 202310977711.3, filed on August 04, 2023, and entitled "METHOD AND APPARATUS FOR EXECUTING QUANTUM TASK, DEVICE, AND STORAGE MEDIUM".

### FIELD OF THE TECHNOLOGY

Embodiments of the present disclosure relate to the field of quantum technologies, and in particular, to a method and an apparatus for executing a quantum task, a device, and a storage medium.

### BACKGROUND OF THE DISCLOSURE

Through a cloud platform, a high-performance physical quantum chip can be provided for a user, thereby reducing a threshold for the user to use the physical quantum chip, and expanding an application scenario of the physical quantum chip.

In conventional technology, there is a topology relationship between physical qubits included in the physical quantum chip. To avoid an error in states of the physical qubits, the physical quantum chip can execute only one quantum task (also called a quantum computation task) at a time, that is, the physical quantum chip cannot execute another quantum task synchronously before the physical quantum chip generates a processing result corresponding to the quantum task. "QuCloud+: A Holistic Qubit Mapping Scheme for Single/Multi-programming on 2D/3D NISQ Quantum Computers" by Liu Lei et al. (ARXIV.ORG, CORNELL UNIVERSITY LIBRARY, 201 OLIN LIBRARY CORNELL UNIVERSITY ITHACA, NY 14853, 29 July 2022) discloses a qubit mapping scheme QuCloud+, which coverts quantum programs into quantum circuits.

Hence, utilization of computing resources is low when the physical quantum chip executes the quantum tasks.

### SUMMARY

Embodiments of the present disclosure provide a method and an apparatus for executing a quantum task, a device, and a storage medium. A physical quantum chip can be divided into a plurality of virtual quantum chips. The plurality of virtual quantum chips can synchronously execute different quantum tasks, thereby improving utilization efficiency of the physical quantum chip.

The present invention is defined in the independent claims. Preferred embodiments are defined by the dependent claims. Further aspects and examples are provided for facilitating the understanding of the invention.

The technical solutions provided in the embodiments of the present disclosure may bring the following beneficial effects:

Compared with a method in which a physical quantum chip executes one quantum task at a time in conventional technology, in the present disclosure, a physical quantum chip is divided to correspond to a plurality of virtual quantum chips that do not interfere with each other. A virtual quantum chip is selected after a to-be-executed quantum task is obtained. Thereby, a partial structure of the physical quantum chip configured for the virtual quantum chip participates in a process of executing the quantum task according to the qubit mapping, and it is ensured that structures other than the partial structure in the physical quantum chip do not participate in the process of executing the quantum task. In this way, physical qubits used in the process of executing the quantum task are better controlled, and other structures are allowed to execute other quantum tasks at the same time.

Through the method, parallel execution of a plurality of quantum tasks is realized, so that efficiency of executing the quantum tasks can be improved, a response speed of feeding back execution results of the quantum tasks can be improved, and computing resources can be reduced. In addition, through the method, one physical quantum chip can serve as a plurality of quantum chips in usage, so that a quantity of physical quantum chips that need to be maintained can be reduced while adapting to increasing quantum tasks, thereby reducing maintenance costs of the physical quantum chips.

### BRIEF DESCRIPTION OF THE DRAWINGS

FIG. 1 is a schematic diagram of an implementation environment of a solution according to an embodiment of the present disclosure.
FIG. 2 is a schematic diagram of a principle of a method for executing a quantum task according to an embodiment of the present disclosure.
FIG. 3 is a flowchart of a method for executing a quantum task according to an embodiment of the present disclosure.
FIG. 4 is a schematic structural diagram of physical qubits according to an embodiment of the present disclosure.
FIG. 5 is a schematic structural diagram of a virtual quantum chip according to an embodiment of the present disclosure.
FIG. 6 is a schematic diagram of a logical quantum circuit according to an embodiment of the present disclosure.
FIG. 7 is a schematic diagram of a virtual quantum circuit according to an embodiment of the present disclosure.
FIG. 8 is a schematic diagram of correspondence between a virtual quantum chip and a physical quantum chip according to an embodiment of the present disclosure.
FIG. 9 is a schematic diagram of a physical quantum chip according to an embodiment of the present disclosure.
FIG. 10 is a schematic diagram of a process of mapping a virtual quantum chip according to an embodiment of the present disclosure.
FIG. 11 is a schematic diagram of a process of mapping a virtual quantum chip according to another embodiment of the present disclosure.
FIG. 12 is a block diagram of an apparatus for executing a quantum task according to an embodiment of the present disclosure.
FIG. 13 is a structural block diagram of a computer device according to an embodiment of the present disclosure.

### DESCRIPTION OF EMBODIMENTS

To make the objectives, technical solutions, and advantages of the present disclosure clearer, implementations of the present disclosure are further described below in detail with reference to the accompanying drawings.

Before the technical solutions of the present disclosure are described, some terms involved in embodiments of the present disclosure are first explained.

Cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on an application of a cloud computing business mode, and may form a resource pool, which is used as required, and is flexible and convenient. The cloud computing technology becomes an important support. The cloud technology relates to basic technologies such as cloud computing, cloud storage, databases, and big data. Cloud applications provided based on the cloud technology include a medical cloud, a cloud Internet of Things, cloud security, cloud calling, a private cloud, a public cloud, a hybrid cloud, cloud gaming, cloud education, cloud conferencing, cloud social, an artificial intelligence cloud service, and the like. With the development of the cloud technology and the application of the cloud technology in different fields, an increasing number of cloud applications emerge.

A quantum computer is a machine that performs computing through a principle of quantum mechanics. Based on the superposition principle of quantum mechanics and quantum entanglement, the quantum computer has a relatively strong parallel processing capability and can resolve some problems that are difficult for a classical computer to compute. The zero resistance characteristic of superconducting qubits and a manufacturing process close to that of integrated circuits make a quantum computing system constructed by using the superconducting qubits one of the most promising systems currently for implementing practical quantum computing.

A quantum processing unit is a quantum-level computer processing unit, that is, a processing unit of a quantum computer. The quantum processing unit may include one or more quantum chips.

The quantum chip (or referred to as a superconducting quantum chip) is a central processing unit of the quantum computer, and is a core component of the quantum computer. The quantum chip integrates a quantum line on a substrate, thereby carrying a function of quantum information processing. In view of the development history of conventional computers, after bottlenecks of technologies are overcome in research in the quantum computer, to implement commodity and industrial upgrading, integration is required. Superconducting systems, semiconductor quantum dot systems, micro-nano photonics systems, and even atomic and ion systems all are intended to be developed toward chips. In view of development, the superconducting quantum chip systems are technically ahead of other physical systems; and conventional semiconductor quantum dot systems are also a target of people's efforts to explore because after all, the development of the conventional semiconductor industry is already very mature. For example, once a semiconductor quantum chip breaks through thresholds for fault-tolerant quantum computing in a decoherence time and control precision, it is expected to integrate related efforts of the conventional semiconductor industry, to reduce development costs. In the embodiments of the present disclosure, a real quantum chip is referred to as a physical quantum chip.

In view of advantages of the quantum computer, in future systems constructed based on the cloud technology, the quantum computer may be used to perform some processing and computing, to provide better services.

A qubit is a measurement unit in quantum informatics. In both a conventional computer and the quantum computer, 0 and 1 are used to represent information. However, differently, in the quantum computer, the qubit may be simultaneously 0 and 1. This effect is called quantum superposition and is a unique characteristic of the quantum computer.

A quantum circuit is a concept describing a circuit (or an operating line) that operates qubits in the quantum computer. The quantum circuit includes representation of the qubits, a flow (a timeline) for handling the qubit units, and operations implemented via various quantum logic gates. A final output of the quantum circuit is generally read through quantum measurement.

A quantum gate is a basic unit in the quantum circuit and operates a small quantity of qubits in quantum computing. Different from a conventional logic gate, the quantum gate is reversible in operation and may be represented by a unitary matrix. The quantum gate includes the Hadamard gate, the Pauli-X gate, the Pauli-Y gate, the Pauli-Z gate, the SWAP gate, the CNOT gate, and the like.

The quantum gate includes a single-qubit gate, a dual-qubit gate, and a multi-qubit gate. The single-qubit gate is a logic gate operating (states of) a single qubit, the dual-qubit gate is a logic gate operating (states of) two qubits, and the multi-qubit gate is a logic gate operating (states of) multiple qubits.

A quantum language is a direction of research in quantum computing. In the field of the quantum language, a standard assembly instruction set is constructed according to logic gate capabilities of the quantum computer, a more advanced computer language may be further abstractly constructed on such basis, and even the field of classical computer languages can be mixed with it to form a hybrid language.

Terminal symbol, nonterminal symbol, and derivation rule: The terminal symbol is a basic symbol of a formal language and may appear in an input or output string of the derivation rule, and it cannot be decomposed into lesser units. The nonterminal symbol is a symbol that may be replaced. At least one start symbol is provided in a form method, and necessarily belongs to the nonterminal symbol. The derivation rule is a component that defines a syntax. Usually, there are a plurality of derivation rules, and each rule specifies what lexeme can be rewritten into other lexeme.

Fidelity is a degree to which a model or a simulation reproduces a condition, a feature, or a state in the real world, and is an indicator for measuring authenticity of the model or the simulation. In quantum mechanics and optics, fidelity of a field is an overlap integration of a field of interest and a target field.

Decoherence (also referred to as quantum decoherence) is an effect in quantum mechanics in which quantum coherence of an open quantum system is gradually lost over time due to quantum entanglement with an external environment. The decoherence makes an interference phenomenon between quanta disappear, so that a quantum behavior of the system is transformed into a classical behavior.

Topology is a discipline that studies some properties of a geometric figure or a geometric space that can remain unchanged after its shape has been continuously changed. The topology only considers positional relationships between objects without considering shapes and sizes of the objects.

Mapping is a noun describing how respective elements of two element sets "correspond" to each other. "Mapping" or "projection" is often equivalent to a function in mathematics and related fields.

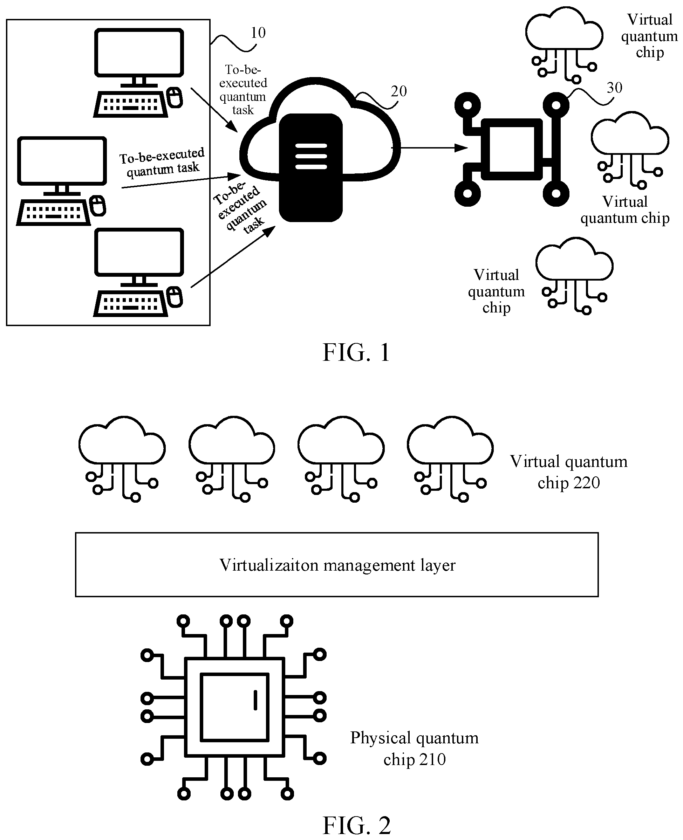

FIG. 1 is a schematic diagram of an implementation environment of a solution according to an embodiment of the present disclosure. The implementation environment of the solution may include a terminal device 10, a cloud server 20, and a quantum computer 30.

The terminal device 10 may be an electronic device such as a personal computer, a tablet computer, a mobile phone, a wearable device, a smart home appliance, or an in-vehicle terminal. An application program is run on the terminal device 10. The application program is configured to provide a quantum task execution function. A user provides a to-be-processed quantum task for the application program, and the application program returns an execution result corresponding to the to-be-processed quantum task to the user.

The cloud server 20 is configured to provide a back-end service for a client of the application program in the terminal device 10. For example, the cloud server 20 may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform, but is not limited thereto.

The cloud server 20 has a data transmitting and receiving function. In an example, the cloud server 20 obtains a to-be-executed quantum task from the terminal device 10, and the cloud server 20 generates a physical quantum circuit corresponding to the to-be-executed quantum task, and indicates, through the physical quantum circuit, the quantum computer 30 to execute the quantum task, to obtain an execution result corresponding to the quantum task.

A physical quantum chip is arranged in the quantum computer 30. The physical quantum chip is configured to perform quantum computing, execute the quantum task, and generate the execution result corresponding to the quantum task. In the method, the physical quantum chip is divided into at least two virtual quantum chips (also referred to as virtual quantum processing units (VQPUs)), that is, the physical quantum chip can be mapped to at least two virtual quantum chips. Each of the virtual quantum chips respectively corresponds to a respective partial structure in the physical quantum chip, and partial structures respectively corresponding to different virtual quantum chips do not include overlapping physical qubits. The quantum computer 30 receives an instruction set corresponding to the physical quantum circuit from the cloud server 20, where physical qubits included in the physical quantum circuit are all present in the partial structures corresponding to the virtual quantum chips in the physical quantum chip.

After obtaining the execution result of the quantum task, the quantum computer 30 sends the execution result of the quantum task to the cloud server 20, and the cloud server 20 sends the execution result of the quantum task to the terminal device 10.

With continuous development of quantum computing, many companies start to release quantum cloud platforms. Quantum clouds are commonly used to provide quantum computing power services. However, because the quantum chips in a current stage are in a noisy intermediate-scale quantum (NISQ) age, the quantum chips currently have high online maintenance costs, and quantities of quantum chips online on the quantum cloud platforms are limited. In addition, the quantum chip is limited by a physical topology thereof. When the quantum chip executes a quantum task, regardless of a size of the quantum task, the quantum task occupies the entire chip, resulting in low utilization of computing resources.

In view of information disclosed by a related quantum cloud platform, a cloud service platform uses a quantum processing unit (QPU) in a mode in which entire hardware is directly invoked for a single quantum task. When a large batch of quantum tasks simultaneously floods the quantum cloud platform, the large batch of quantum tasks needs to be queued, and the quantum tasks are executed one by one by using the physical quantum chip. In this way, long task queue waiting time is required before the user obtains an execution result corresponding to a quantum task, resulting in a decrease in use experience of the user.

In the quantum task execution manner, only launching more quantum chip resources on line can improve a response speed for a user task. However, high costs are required to maintain a stable online physical quantum chip. In addition, there is usually no need to invoke resources of the entire physical quantum chip for the single quantum task, and the quantum task execution mode in which the single quantum task occupies the entire physical quantum chip causes a large number of quantum computing resources to be idle and wasted.

FIG. 2 is a schematic diagram of principle of a method for executing a quantum task according to an embodiment of the present disclosure.

To overcome an execution mode defect caused by a physical quantum chip being dedicated to a single quantum task at any moment, in embodiments of the present disclosure including the embodiments of both the claims and the specification (hereinafter referred to as "all embodiments of the present disclosure"), a physical quantum chip 210 is segmented into a plurality of virtual quantum chips 220 through qubit mapping on a basis a virtualization concept. A cloud server provides a function of a virtualization management layer, so that virtual quantum chips 220 have independent interfaces, respectively. In other words, the virtual quantum chips 220 can execute different quantum tasks separately within the same time period. In such manner, topology limitations on the physical quantum chip are relieved, and the same physical quantum chip can execute a plurality of quantum tasks simultaneously, so that utilization of quantum computing resources can be improved, and a waste due to idling resources can be reduced. Hence, a quantum cloud platform can configure different virtual quantum chips according to user's demand to implement a customized service.

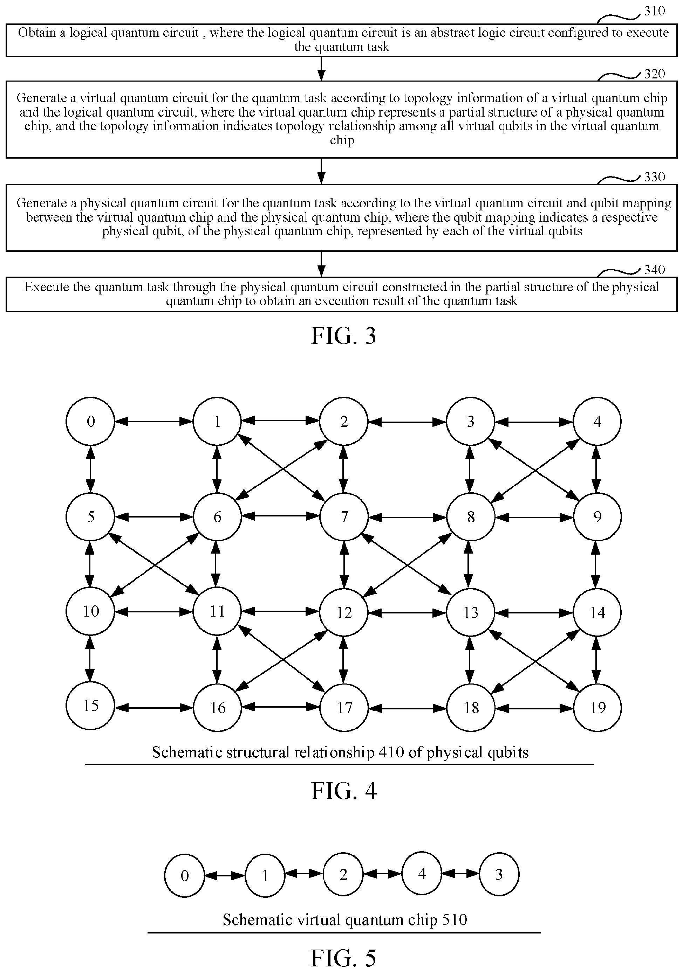

FIG. 3 is a flowchart of a method for executing a quantum task according to an embodiment of the present disclosure. For example, an execution entity of the method may be the cloud server 20 in FIG. 1. For convenience of description, hereinafter a computer device is used as exemplary execution entity to describe a method for executing a quantum task. As shown in FIG. 3, the method may include the following step 310 to step 340.

In step 310, a logical quantum circuit is obtained. The logical quantum circuit is an abstract logic circuit configured to execute the quantum task.

The quantum task (e.g., a quantum computing task) is a task that is to be executed. The quantum task may be a critical path task (that is, a task which can dictate the finish date of a project, and a series of such tasks form a critical path for controlling and monitoring the project) that needs to be executed by a physical quantum chip. In all embodiments of the present disclosure, the quantum task may be a computing task in the field of quantum chemical simulation, quantum artificial intelligence and cryptographic analysis, meteorological forecasting, drug design, oil exploration, or the like.

In all embodiments of the present disclosure, the to-be-executed quantum task may come from a user of a quantum cloud service. For example, the user sends the to-be-executed quantum task to the computer device through a terminal device. In all embodiments of the present disclosure, the to-be-executed quantum task may be described using a quantum program. The quantum program of the to-be-executed task includes logical qubits required by the to-be-executed quantum task and gate units required to perform logical operations on the logical qubits. In all embodiments of the present disclosure, the computer device may obtain the quantum program of the to-be-executed quantum task from the terminal device and obtain the logical quantum circuit of the to-be-executed task according to the quantum program.

As an alternative, the computer device may obtain the logical quantum circuit of the to-be-executed quantum task directly. For example, the user transmits the logical quantum circuit to the computer device, so that the computer device obtains the logical quantum circuit.

The logical quantum circuit is a kind of a quantum path. The logical quantum circuit may be regarded as a quantum computing model. In all embodiments of the present disclosure, the logical quantum circuit includes logical qubits and quantum gates configured to perform respective logical operations on the logical qubits (i.e., on states of the logical qubits). In all embodiments of the present disclosure, the quantum gates in the logical quantum circuit follow a temporal sequence, and the quantum gates perform the respective operations on the states of the logical qubits in the logical quantum circuit according to temporal sequence. Thereby, the quantum task can be executed.

In all embodiments of the present disclosure, there may be no limitation imposed on topology relationship among the logical qubits. That is, the logic quantum circuit being "abstract" refers to that the logic qubits are not subject to physical limitations. In other words, when a quantum gate performs the respective logical operation on more than one logical qubits, it is not necessary to check whether the more than one logical qubits are capable of interacting with each other directly.

In step 320, a virtual quantum circuit for the quantum task is generated according to topology information of a virtual quantum chip and the logical quantum circuit. The virtual quantum chip represents a partial structure of a physical quantum chip. The topology information indicates topology relationship among all virtual qubits in the virtual quantum chip.

The virtual quantum circuit is a circuit constructed using at least a part of the virtual qubits. For example, the virtual quantum circuit is constructed as the virtual qubits plus the quantum gates operating states of the virtual qubits to execute the quantum task.

The physical quantum chip is a real quantum chip, and actual execution of the quantum task is completed through the physical quantum chip. For example, logical operations are performed on states of physical qubits in the physical quantum chip by using gate units, and resultant states of the physical qubits are observed to obtain the execution result of the quantum task.

It can be learned from the foregoing introduction to the background technologies that, in the related art, due to a limitation on the topology information of the physical quantum chip, the physical quantum chip can execute only one quantum task at a time, resulting in a large waste of computing resources. In the method, the physical quantum chip is segmented into a plurality of virtual quantum chips. Each of the virtual quantum chips corresponds to a respective partial structure in the physical quantum chip, and there is no overlapping qubit among respective partial structures of different virtual quantum chips in the physical quantum chip. That "the physical quantum chip is segmented into a plurality of virtual quantum chips" may be understood as establishing a mapping relationship between partial structures in the physical quantum chip and the virtual quantum chips.

In all embodiments of the present disclosure, the virtual quantum chip is mapped to the partial structure in the physical quantum chip. The virtual quantum chip includes virtual qubits, and there is mapping between the virtual qubits and physical qubits in the partial structure in the physical quantum chip.

In all embodiments of the present disclosure, a quantity of virtual qubits included in the virtual quantum chip may be related to a quantity of physical qubits included in the partial structure to which the virtual quantum chip is mapped. For example, the quantity of physical qubits included in the virtual quantum chip is less than or equal to the quantity of physical qubits included in the partial structure to which the virtual quantum chip is mapped.

For example, a virtual quantum chip corresponds to partial structure 1 in the physical quantum chip, partial structure 1 includes ten physical qubits, and the virtual quantum chip includes ten virtual qubits. As another example, a virtual quantum chip corresponds to partial structure 2 in the physical quantum chip, the partial structure 2 includes six physical qubits, and the virtual quantum chip includes five virtual qubits.

In all embodiments of the present disclosure, the topology information of the virtual quantum chip may be consistent with topology information of the respective partial structure of the virtual quantum chip in the physical quantum chip. That is, arrangement of the virtual qubits in the virtual quantum chip is the same as arrangement of the physical qubits in the respective partial structure of the virtual quantum chip in the physical quantum chip, and connectivity among the virtual qubits in the virtual quantum chip is consistent with connectivity among the physical qubits in the partial structure in the physical quantum chip.

For example, virtual qubit 1 is mapped to physical qubit 1, and virtual qubit 2 is mapped to physical qubit 2. If the physical qubit 1 and the physical qubit 2 can interact with each other directly (in other words, they are "directly connected" in topology), virtual qubit 1 and virtual qubit 2 can interact with each other directly.

For a process of establishing the mapping relationship between the virtual quantum chips and the partial structures in the physical quantum chip, reference may be made to following embodiments.

In the field of quantum computing, the topology information indicates whether qubits have the "direct connection" which is irrelevant to their positions and through which the qubits can interact with each other directly. In all embodiments of the present disclosure, the topology information is configured to indicate that at least two qubits are directly connected, i.e., indicate connectivity among the qubits. For example, for any two qubits that are directly connected, the two qubits can interact with each other directly (for example, interact via operation of a quantum gate, in which a state of one qubit affects that of the other). For any two qubits that are not directly connected, a state of neither qubit can affect that of the other. In all embodiments of the present disclosure, the above qubits may be virtual qubits or physical qubits.

From a perspective of a hardware structure, for two physical qubits having connectivity in the physical quantum chip (namely, the real quantum chip), elements such as couplers are arranged between lines of the two physical qubits, and interaction between states of the two physical qubits is realized through the elements.

In all embodiments of the present disclosure, the topology information of the virtual quantum chip may include connectivity between any two virtual qubits in the virtual quantum chip. In all embodiments of the present disclosure, the connectivity between virtual qubits may be indicated using one-bit information, where "1" indicates that two virtual qubits are directly connected, and "0" indicates that two virtual qubits are not directly connected.

For example, for virtual qubit 1 and virtual qubit 2 in a virtual quantum chip, in topology information of the virtual quantum chip, if a bit "1" is assigned between the virtual qubit 1 and the virtual qubit 2, it indicates that the virtual qubit 1 and the virtual qubit 2 are directly connected; and if a bit "0" is assigned between the virtual qubit 1 and the virtual qubit 2, it indicates that the virtual qubit 1 and the virtual qubit 2 are not directly connected.

In all embodiments of the present disclosure, the physical quantum chip may correspond to a plurality of virtual quantum chips. After the computer device obtains the logical quantum circuit corresponding to the to-be-executed quantum task, the computer device determines a virtual quantum chip configured to execute the foregoing quantum task from the at least one candidate virtual quantum chip, and determines the topology information of the virtual quantum chip. Thereby, the computer device generates the virtual quantum circuit for the quantum task according to the logical quantum circuit and the topology information of the virtual quantum chip.

In all embodiments of the present disclosure, that the computer device determines a virtual quantum chip configured to execute the foregoing quantum task from at least one candidate virtual quantum chip may include: determining, according to the topology information of the virtual quantum chip, the virtual quantum chip for the quantum task from at least one candidate virtual quantum chip. In all embodiments of the present disclosure, the determined virtual quantum chip may be a virtual quantum chip capable of executing the quantum task. For example, a topology relationship among virtual qubits included in the determined virtual quantum chip shall conform to the logical quantum circuit. In other words, when considering a limitation of topology among the virtual qubits, the determined virtual quantum chip can still implement the logical quantum circuit. For example, it is assumed that the logical quantum circuit includes only logical qubit 1 and logical qubit 2, logical qubit 1 and logical qubit 2 require a quantum gate to perform a logical operation at a first moment, virtual qubit 1 corresponds to logical qubit 1, and virtual qubit 2 corresponds to logical qubit 2. In a case that virtual qubit 1 and virtual qubit 2 are directly connected, it indicates that the topology relationship between virtual qubits 1 and 2 in the virtual quantum chip conforms to the logical quantum circuit. In all embodiments of the present disclosure, when the computer device selects the virtual quantum chip for the quantum task from the at least one candidate virtual quantum chip, the computer device may determine the virtual quantum chip for the quantum task according to a virtual-quantum-chip indicator of the to-be-executed quantum task.

For example, the virtual-quantum-chip indicator is from the user that provides the quantum task. In other words, the computer device supports the user in selecting, according to an actual need, the virtual quantum chip configured to execute the quantum task. Selecting a different virtual quantum chip to execute a quantum task means using a different partial structure in the physical quantum chip to execute the quantum task. Because physical qubits at different positions in the physical quantum chip have different reliability, the physical quantum chip is segmented into the plurality of virtual quantum chips, so that different virtual quantum chips have different computing characteristics. This is convenient for the user to select a corresponding virtual quantum chip according to an actual need, to implement a customized service.

In all embodiments of the present disclosure, the virtual quantum circuit may be a kind of a quantum path. In all embodiments of the present disclosure, the virtual quantum circuit includes virtual qubits and gate units configured to perform logical operations on the virtual qubits. The gate units operate in a temporal sequence.

In all embodiments of the present disclosure, the gate units in the virtual quantum circuit may be configured in conformity to the topology information of the virtual quantum chip. For example, a dual-qubit quantum gate is configured to perform a logical operation on two virtual qubits, and in such case the two virtual qubits as inputs of the dual-qubit quantum gate need to be directly connected in the topology information.

In all embodiments of the present disclosure, step 320 may include converting the logical qubits in the logical quantum circuit into the virtual qubits and converting the gate units in the logical quantum circuit into gate units that conform to a topology relationship among the virtual qubits according to the topology information of the virtual quantum chip. Details may refer to following embodiments.

In step 330, a physical quantum circuit for the quantum task is generated according to the virtual quantum circuit and qubit mapping between the virtual quantum chip and the physical quantum chip. The qubit mapping indicates a respective physical qubit, of the physical quantum chip, represented by each of the virtual qubits.

The physical quantum circuit is a circuit constructed using physical qubits. For example, the physical quantum circuit is constructed as the physical qubits plus the quantum gates operating states of the physical qubits to execute the quantum task.

In all embodiments of the present disclosure, the physical quantum circuit may include physical qubits and gate units configured to perform logical operations on the physical qubits. Operation of the physical quantum chip depends on the physical quantum circuit and is equivalent to executing the quantum task and generating the execution result of the quantum task.

In all embodiments of the present disclosure, the qubit mapping is used for determining the respective physical qubits for the virtual qubits from the physical quantum chip. In all embodiments of the present disclosure, step 330 may include: determining, according to the qubit mapping, the respective physical qubit of at least one virtual qubit in the virtual quantum chip; and replacing each virtual qubit in the virtual quantum circuit with the respective physical qubit of said virtual qubit to obtain the physical quantum circuit. Details may refer to following embodiments.

FIG. 4 is a schematic diagram 410 of a structural relationship of physical qubits according to an embodiment of the present disclosure. A bidirectional arrow in the figure identifies that two physical qubits are directly connected. For example, in FIG. 4, physical qubit q[0] and physical qubit q[1] are directly connected, and physical qubit q[0] and physical qubit q[6] are not directly connected. A topology relationship among the physical qubits is related to a hardware structure of the physical quantum chip. In all embodiments of the present disclosure, the topology relationship among the physical qubits may be unchangeable.

In step 340, the quantum task is executed through the physical quantum circuit constructed in the partial structure of the physical quantum chip to obtain an execution result of the quantum task.

In all embodiments of the present disclosure, after generating the physical quantum circuit of the physical quantum chip, the computer device may generate an instruction set of the physical quantum circuit, and sends the instruction set to the physical quantum chip. The physical quantum chip executes the quantum task according to instructions in the instruction set to generate the execution result of the quantum task. The physical quantum chip may send the execution result of the quantum task to the computer device.

In all embodiments of the present disclosure, the execution result of the quantum task is a result obtained by the physical quantum chip that has performed quantum computing of the quantum task.

In conclusion, compared with a method in which a physical quantum chip executes one quantum task at a time in the related art, in the present disclosure, a physical quantum chip is segmented, so that the physical quantum chip corresponds to a plurality of virtual quantum chips that do not interfere with each other. A virtual quantum chip is selected after a to-be-executed quantum task is obtained, so that a respective partial structure of the selected virtual quantum chip in the physical quantum chip participates in a process of executing the quantum task according to qubit mapping, to ensure that structures other than the partial structure in the physical quantum chip do not participate in the process of executing the quantum task. In this way, physical qubits used in the process of executing the quantum task are better controlled, and the other structures are allowed to execute other quantum tasks at the same time.

Through the method, parallel execution of a plurality of quantum tasks is realized, so that efficiency of executing the quantum tasks can be improved, a response speed of feeding back execution results of the quantum tasks can be improved, and computing resources can be reduced. In addition, through the method, one physical quantum chip serves as a plurality of quantum chips in usage, so that a quantity of physical quantum chips that need to be maintained can be reduced while adapting to increasing quantum tasks, thereby reducing maintenance costs of the physical quantum chips.

The following describes a process of generating the logical quantum circuit through several embodiments. An execution entity of the operations may be the computer device.

In all embodiments of the present disclosure, step 310 may include the following several sub-steps 312 to 316 (not shown in the accompanying drawings in this specification).

In sub-step 312, a task indicator configured to indicate the quantum task to be executed is obtained.

In all embodiments of the present disclosure, the task indicator may be configured for indicating logical qubits and gate units configured to perform operations on the logical qubits. In all embodiments of the present disclosure, the task indicator may be a quantum program, the quantum program includes at least one row of program instructions, and the program instructions are configured for instructing which a logical operation is to be performed on which virtual qubit. In all embodiments of the present disclosure, the computer device may receive the task indicator sent by the terminal device. In all embodiments of the present disclosure, the computer device may obtain the task indicator through an external input device.

In sub-step 314, a respective first gate unit and at least one logical qubit are determined for each operation indicator comprised in the task indicator. The first gate unit is configured to perform a logical operation on states of the at least one logical qubit.

In all embodiments of the present disclosure, the operation indicator may be configured for indicating a logical operation of the first gate unit, and the first gate unit is a quantum gate configured to perform the logical operation on the logical qubit(s). The first gate unit may be one quantum gate or a combination of a plurality of quantum gates. Details of the first gate unit may refer to following embodiments.

When the task indicator is the quantum program, the operation indicator may be a program instruction in the quantum program, and the program instruction includes the first gate unit and logical qubit(s) on which the first gate unit is configured to perform the logical operation. For example, a program instruction may be compiled as: H q[0], where q[0] indicates logical qubit 0, and H indicates that the first gate unit is an H gate.

In all embodiments of the present disclosure, different first gate units may have different functions, and states of the logical qubit(s) may change after the operation of the first gate unit.

For example, different first gate units are configured to perform logical operations on logical qubits at different moments, there is a temporal sequence of the first gate units. When generating the logical quantum circuit, the first gate units need to be arranged according to the temporal sequence.

In sub-step 316, the respective first gate units of all the operation indicators are connected according to a temporal sequence of the operation indicators to generate the logical quantum circuit. The temporal sequence of the operation indicators is indicated by the task indicator.

In all embodiments of the present disclosure, the temporal sequence may represent an order of operation among the first gate units for the operation indicators. For example, when the task indicator is the quantum program, an arrangement order of the program instructions in the quantum program represents a temporal sequence of the first gate units. A program instruction appearing at a precedent position in the quantum program indicates an earlier operation than a program instruction arranged appearing at a subsequent position the quantum program.

For example, the quantum program includes program instruction 1, program instruction 2, program instruction 3, and program instruction 4 from top to bottom. In this case, an execution order of first gate unit 1 corresponding to program instruction 1 takes precedence over an execution order of first gate unit 2 corresponding to program instruction 2, the execution order of first gate unit 2 corresponding to program instruction 2 takes precedence over an execution order of first gate unit 3 corresponding to program instruction 3, and the execution order of first gate unit 3 corresponding to program instruction 3 takes precedence over an execution order of first gate unit 4 corresponding to program instruction 4. In other words, an order of operation among the foregoing four first gate units is first gate unit 1, first gate unit 2, first gate unit 3, and first gate unit 4 in sequence. Hence, a logical operation of second gate unit 2 is performed only after a logical operation of first gate unit 1 has been completed, then a logical operation of the first gate unit 3 is performed, and then a logical operation of the first gate unit 4 is performed. In all embodiments of the present disclosure, the order of the operation among the first gate units may be unchangeable.

Sub-step 316 may refer to determining an order of the first gate units in the logical quantum circuit according to the temporal sequence to ensure that a latter first gate unit in the order always operates later than a former first gate unit in the order. In all embodiments of the present disclosure, the temporal sequence may be indicated from left to right in the quantum path (i.e., a path diagram) of the logic quantum circuit, and a first gate unit located on the left operates earlier than a first gate unit located on the right.

In all embodiments of the present disclosure, the respective first gate units of all the operation indicators may be connected according to the temporal sequence of the operation indicators, such that the logical quantum circuit for the quantum task is generated from the logical qubits.

In all embodiments of the present disclosure, at least one logical qubit may be sequentially determined for each first gate unit according to the temporal sequence of the first gate units, and the logical qubits of all first gate units are connected along with connecting the first gate units, to generate the logical quantum circuit.

Hence, content of generating the logical quantum circuit according to the task indicator has been described. The task indicator represents logical qubits that needs logical operation and gate units, and the task indicator is converted into the logical quantum circuit, so that the objective of automatically generating the logical quantum circuit according to a temporal sequence of the operation indicators is achieved, and efficiency of generating the logical quantum circuit can be improved. In addition, through the method, the user does not need to provide a logical quantum circuit, and a logical quantum circuit easier to be executed by the computer device can be flexibly generated as long as task indicator having specific instruction information is provided. This can reduce a threshold for the user to obtain the execution result of the quantum task, and greatly avoid an error in the execution result because the user provides an incorrect logical quantum circuit, thereby improving accuracy of the execution result.

The following describes a process of generating the virtual quantum circuit through several embodiments. An execution entity of the operation may be the computer device.

Because the virtual quantum circuit includes the virtual qubits and the gate units configured to operate states of the virtual qubits, the gate units included in the virtual quantum circuit need to be determined in the process of generating the virtual quantum circuit. Then, the gate units are arranged according to a temporal sequence.

In all embodiments of the present disclosure, step 320 further includes the following several sub-steps 322 and 324.

In sub-step 322, a respective second gate unit for each first gate unit in the logical quantum circuit is determined according to the topology information. Each first gate unit is a quantum gate configured to perform a respective logical operation on states of logical qubits in the logical quantum circuit, and the second gate unit for such first gate unit is a quantum gate configured to perform the same logical operation on states of the virtual qubits.

Sub-step 322 is mainly configured to determine the respective second gate units in the virtual quantum circuit for the first gate units in the logical quantum circuit. In all embodiments of the present disclosure, the first gate unit and the second gate unit may have the same function. That is, the first gate unit and the second gate unit are configured to implement the same logical operation.

In all embodiments of the present disclosure, a gate unit may include at least one quantum gate. For example, the gate unit is a single quantum gate. As an alternative, the gate unit may include a plurality of quantum gates. For example, the gate unit includes quantum gates that are successively executed in time. In all embodiments of the present disclosure, a type of the quantum gate may include, but is not limited to, at least one of the following: a single-qubit gate (or a single-bit gate), a dual-qubit gate (or a dual-bit gate), or a multi-qubit gate (or a multi-bit gate).

The single-qubit gate is a quantum gate configured to perform a logical operation on a single qubit. The dual-qubit gate is a quantum gate configured to perform a logical operation on two qubits. States of the two qubits are inputted into the dual-qubit gate for logical operation to obtain new states of the two qubits as output.

The multi-qubit gate is a quantum gate configured to perform an operation on a plurality of qubits, and the multi-qubit gate may be obtained by combining dual-qubit gate(s) and/or single-qubit gate(s). For example, a multi-qubit gate may be decomposed into three single-qubit gates, and another multi-qubit gate may be decomposed into one dual-qubit gate and one single-qubit gate.

In all embodiments of the present disclosure, the first gate unit may refer to any gate unit included in the logical quantum circuit. In all embodiments of the present disclosure, the first gate unit may be a single-qubit gate or a dual-qubit gate. For example, the first gate unit is a Hadamard (H) gate. The H gate is configured to convert a state of a qubit into a superposed state. As another example, the first gate unit is a Controlled NOT (CNOT) gate, to convert two qubits into entangled qubits.

In all embodiments of the present disclosure, each second gate unit in the virtual quantum circuit may be a gate unit corresponding to one first gate unit. In all embodiments of the present disclosure, a temporal sequence of the second gate units in the virtual quantum circuit is identical to the temporal sequence of the first gate units in the logical quantum circuit.

In all embodiments of the present disclosure, the second gate unit may be configured to implement the same logical operation as the corresponding first gate unit. For example, states of a logical qubit inputted into the corresponding first gate unit is the same as states of a virtual qubit inputted into the second gate unit, and states of a logical qubit outputted by the corresponding first gate unit is the same as states of a virtual qubit outputted by the second gate unit. A quantity of quantum gate(s) included in the second gate unit is greater than or equal to a quantity of quantum gate(s) included in the corresponding first gate unit.

For example, the second gate unit is identical to the first gate unit. For example, when the first gate unit is a single-qubit gate, the second gate unit is the same as the first gate unit. Assuming that the first gate unit is an H gate, the second gate unit is also an H gate.

For example, the second gate unit is different from the first gate unit. As mentioned above, logical qubits are not limited by a topology relationship, which means that any two logical qubits can be regarded as directly connected qubits. Therefore, the first gate unit in the logical quantum circuit may perform its logical operation on any one or more logical qubits.

The virtual quantum chip has the topology information. That is, some virtual qubits included in the virtual quantum chip are directly connected to each other, while others may not. If virtual qubits corresponding to (at least two) logical qubits on which the first gate unit is configured to perform the logical operation are not directly connected, states may be swapped first between the virtual qubits with the other virtual qubits by using quantum gates, and then the first gate unit can perform the corresponding logical operation on the other virtual qubits, such that the first gate unit and the second gate unit can finally achieve the same function.

Since the quantum gates for state swapping is added to achieve the same effect as the first gate unit, the quantity of quantum gates included in the second gate unit is greater than the quantity of quantum gates included in the first gate unit. For example, the second gate unit includes at least one swap-gate unit and a gate unit of the same type as the first gate unit.

In all embodiments of the present disclosure, the computer device determining, according to the topology information, the respective second gate unit for each first gate unit in the logical quantum circuit may include: determining one or more virtual qubits corresponding to the one or more logical qubits on which the first gate unit operates; in response to the one or more virtual qubits being multiple qubits, determining, according to the topology information of the virtual quantum chip, a topology relationship among the multiple qubits (that is, whether the multiple qubits are directly connected); and determining the second gate unit corresponding to the first gate unit according to the topology relationship. Details may refer to following embodiments.

In sub-step 324, the virtual quantum circuit for the quantum task is generated according to the respective second gate unit for each first gate unit and a temporal sequence of the first gate units in the logical quantum circuit.

In all embodiments of the present disclosure, the temporal sequence of the first gate units in the logical quantum circuit may be configured for representing an order of operation among the first gate units in the logical quantum circuit. In all embodiments of the present disclosure, the temporal sequence of the first gate units in the logical quantum circuit is determined by the computer device according to a sequence of arranging the first gate units in a path diagram of the logical quantum circuit. For example, in the path diagram of the logical quantum circuit, the first gate units are arranged from left to right. A first gate unit closer to the left end operates earlier than a first gate unit closer to the right end.

Determining the respective second gate units corresponding to the first gate units are determined is a process of obtaining all gate units forming the virtual quantum circuit. The cloud server determines the temporal sequence of the second gate units according to the temporal sequence of the first gate units in the logical quantum circuit, and then arranges the second gate units according to such temporal sequence to generate the virtual quantum circuit for the quantum task.

For example, the order of operation among the second gate units is the same as execution the order of operation among the corresponding first gate units. For example, the logical quantum circuit includes three first gate units adjacent in the order of operation: first gate unit 1, first gate unit 2, and first gate unit 3, where first gate unit 1 operates earliest among the three and first gate unit 2 operates between first gate unit 1 and first gate unit 3. It is assumed that the computer device determines that first gate unit 1 corresponds to second gate unit 1, first gate unit 2 corresponds to second gate unit 2, and first gate unit 3 corresponds to second gate unit 3. In this case, in the virtual quantum circuit, second gate unit 1, second gate unit 2, and second gate unit 3 are three second gate units adjacent in the order of operation, where second gate unit 1 operates earliest among the three, and second gate unit 2 operates between second gate unit 1 and second gate unit 3.

In the foregoing process, the content of generating the virtual quantum circuit according to the topology relationship represented by the virtual quantum chip is described. The respective second gate units corresponding to the first gate units are determined according to the topology information of the virtual quantum chips, to convert, according to the temporal sequence of the first gate units and through the second gate units in the logical quantum circuit, the logical quantum circuit into the virtual quantum circuit. The virtual quantum circuit is adapted to the topology information of the virtual quantum chip. Thereby it is avoided that the quantum task is directly executed through an arbitrarily obtained logical quantum circuit has poor adaptability. Based on the logical quantum circuit of the quantum task, the virtual quantum circuit is generated layer by layer according to the topology information of the virtual quantum chip, so that the virtual quantum chip provides the virtual quantum circuit. In other words, a partial structure in the physical quantum chip can be configured to execute the quantum task smoothly in subsequent operations, and pertinence of executing the quantum task through the partial structure in the physical quantum chip is improved.

The following describes a process of generating the second gate unit through several embodiments. An execution entity of the operation may be the computer device.

In the process of determining the second gate units corresponding to the first gate units, a manner of generating the second gate units may be classified according to types of the first gate units. Methods for generating second gate units corresponding to different types of first gate units are not exactly the same. In all embodiments of the present disclosure, the type of the first gate unit may be determined by a quantity of logical qubits on which the first gate unit is configured to perform the logical operation.

The following mainly describes, through several embodiments, a case in which the first gate unit is a single-qubit gate and a case in which the first gate unit is a dual-qubit gate. When the first gate unit is a multi-qubit gate, the multi-qubit gate may be implemented by a combination of dual-qubit gate(s) and/or single-qubit gate(s) (for example, a function of a three-quantum gate may be implemented by a combination of one dual-qubit gate and one single-qubit gate), and hence the case of the multi-qubit gate may be decomposed into the case of the single-qubit gate and the case of the dual-qubit gate. That is, the first gate unit may be decomposed into at least two first sub-units, and the first sub-units serve as new first gate units. Through methods in the following embodiments, respective second gate units corresponding to the first sub-units are determined, and these second gate units are combined according to a temporal operation sequence to generate the second gate unit corresponding to the original first gate unit. In all embodiments of the present disclosure, a multi-qubit gate decomposition method includes: predicting an equivalent combination of gates for the multi-qubit gate, testing the multi-qubit gate and the equivalent combination of gates, and determining the equivalent combination of gates to serve as the multi-qubit gate in a case that the testing is successfully. Details may refer to technologies related to decomposition of multi-qubit gate and are not specifically described herein.

Example 1: Determining the second gate unit corresponding to the first gate unit which is a dual-qubit gate.

In all embodiments of the present disclosure, sub-step 322 may include the following several sub-operations 322-a and 322-b when the first gate unit is the dual-qubit gate configured to perform the logical operation on a first logical qubit and a second logical qubit.

In sub-step 322-a: first information indicating connectivity between a first virtual qubit and a second virtual qubit is determined from the topology information of the virtual quantum chip. The first virtual qubit is a counterpart of the first logical qubit in the virtual quantum chip, and the second virtual qubit is a counterpart of the second logical qubit in the virtual quantum chip.

The connectivity represents how the first virtual qubit and the second virtual qubit are connected. For example, the connectivity includes: the first virtual qubit and the second virtual qubit being directly connected (i.e., capable of interacting with each other directly); or the first virtual qubit and the second virtual qubit being not directly connected (i.e., incapable of interacting with each other directly).

The first logical qubit and the second logical qubit are two different logical qubits. The first logical qubit and the second logical qubit are two logical qubits, on which the first gate unit is configured to perform a logical operation, in the logical quantum circuit. Different first gate units may perform their logical operations on states of a same logical qubit, or on states of different logical qubits.

For any first gate unit belonging to a dual-qubit gate in the logical quantum circuit, the first gate unit performs a logical operation simultaneously on states of the first logical qubit and states of the second logical qubit.

In all embodiments of the present disclosure, the first virtual qubit may refer to a virtual qubit corresponding to the first logical qubit in the virtual quantum circuit, and the second virtual qubit may refer to a virtual qubit corresponding to the second logical qubit in the virtual quantum circuit. As described above, a topology relationship of the logical qubits is not subject to any limitation, while a topology relationship among virtual qubits may be limited. In other words, the first virtual qubit is a topology-limited version of the first logical qubit, and the second virtual qubit is a topology-limited version of the second logical qubit.

The first gate unit may be arranged between the first logical qubit and the second logical qubit without considering the topology relationship between the first logical qubit and the second logical qubit, but whether the same gate unit can be directly arranged between the first virtual qubit and the second virtual qubit needs to be determined according to the topology relationship between the first virtual qubit and the second virtual qubit. Therefore, the second gate unit corresponding to the first gate unit needs to be determined according to the topology information.

In all embodiments of the present disclosure, the logical quantum circuit may include a plurality of logical qubits. To identify different logical qubits, each logical qubit has an identifier, and the identifier is configured for uniquely identifying the logical qubit. For example, the identifier is a sequential number of the logical qubit. For example, if a sequential number of a logical qubit is 0, the logical qubit may be indicated as q[0]; and if a sequential number of a logical qubit is 1, the logical qubit may be indicated as q[1]. The rest can be deduced by analogy.

Similarly, to identify the virtual qubits, each virtual qubit also has identifier, and the identifier may be a sequential number of the virtual qubit.

In all embodiments of the present disclosure, there may be a correspondence between identifier of a logical qubit and identifier of the virtual qubit corresponding to (i.e., represented by) such logical qubit. For example, the logical qubit and the virtual qubit corresponding to the logical qubit have the same sequential number. For example, q[0] identifies both logical qubit 0 in the logical quantum circuit and virtual qubit 0 in the virtual quantum circuit.

In an example, the computer device determines the first virtual qubit corresponding to the first logical qubit according to identifier of the first logical qubit and determines the second virtual qubit corresponding to the second logical qubit according to identifier of the second logical qubit. The computer device determines, from the topology information of the virtual quantum chip, whether the first virtual qubit and the second virtual qubit are directly connected to generate the first information.

In all embodiments of the present disclosure, the first information may be configured for indicating the connectivity between the first virtual qubit and the second virtual qubit. The connectivity may refer to whether there is a directly connection, and hence the first information may also be configured as information on whether the first virtual qubit and the second virtual qubit are directly connected. For example, the first information may be use one bit, where "0" indicates that the first virtual qubit and the second virtual qubit are not directly connected, and "1" indicates that the first virtual qubit and the second virtual qubit are directly connected. The first information is configured for determining the manner of generating the second gate unit.

In sub-step 322-b: the respective second gate unit of the first gate unit is determined according to the first information. When the first gate unit is the dual-qubit gate, the computer device determines the manner of generating the second gate unit according to the first information.

For example, when the first information represents that the first virtual qubit and the second virtual qubit are directly connected (i.e., capable of interacting with each other directly), the computer device determines that a quantum gate can be directly arranged between the first virtual qubit and the second virtual qubit, and the quantum gate has the same type as the first gate unit.

For example, when the first information represents that the first virtual qubit and the second virtual qubit are not directly connected (i.e., incapable of interacting with each other directly), the computer device determines that a quantum gate cannot be directly arranged between the first virtual qubit and the second virtual qubit. Details may refer to following embodiments.

Through the foregoing method, when the first gate unit is the dual-qubit gate, the method for generating the second gate unit is determined according to the topology information, so that the generated second gate unit conforms to the topology limitation among the virtual qubits.

In the foregoing sub-step 322-a and sub-step 322-b, it is described that when the logical qubits on which the first gate unit performs logical operation include the first logical quantum and the second logical qubit, the first information representing whether the first virtual qubit and the second virtual qubit are directly connected needs to be determined according to the topology relationship of the virtual quantum chip, to differentially determine the second gate unit corresponding to the first gate unit according to the first information, where a manner of determining the second gate unit is different for different first information . Since the second gate unit for generating the virtual quantum circuit in the virtual quantum chip and the virtual quantum chip corresponds to the physical quantum chip for executing the quantum task, the second gate unit needs to represent the logical operation process accurately, and the first information indicating connectivity between different virtual qubits serves as a limiting condition for generating the second gate unit. This facilitates obtaining a more accurate second gate unit, so that accuracy of generating the virtual quantum circuit can be improved.

### Case 1: the first virtual qubit and the second virtual qubit being directly connected

The computer device determining the second gate unit corresponding to the first gate unit according to the first information includes: determining the second gate unit to be identical to the first gate unit in response to the first information indicating that the first virtual qubit and the second virtual qubit are capable to interact with each other directly.

If the first virtual qubit and the second virtual qubit are capable to interact with each other directly, it indicates that the quantum gate can be directly established between the first virtual qubit and the second virtual qubit. Therefore, the computer device determines the second gate unit to be the same as the first gate unit. For example, if the first gate unit is a CNOT gate, the computer device also determines the second gate unit as the CNOT gate, where the first gate unit is configured to perform CNOT logical operation on the first logical qubit and the second logical qubit, and the second gate unit is configured to perform CNOT logical operation on the first virtual qubit and the second virtual qubit.

### Case 2: the first virtual qubit and the second virtual qubit being not directly connected.

The computer device determining the second gate unit corresponding to the first gate unit according to the first information includes: determining a state swapping qubit-chain according to the topology information, where the state swapping qubit-chain is configured for at least one of: swapping states between the first virtual qubit and another qubit, or swapping states between the second virtual qubit and another qubit; determining at least one swap-gate unit according to the state swapping qubit-chain; and combining the at least one swap-gate unit and the first gate unit to obtain an equivalent gate unit, where the equivalent gate unit serves as the second gate unit. The swap-gate unit is configured to swap states between two qubits serving as inputs of the swap-gate unit. The at least one swap-gate unit operates temporally previous to the first gate unit in the equivalent gate unit.

For example, if the first virtual qubit and the second virtual qubit are incapable to interact with each other directly, it indicates that the first physical qubit corresponding to the first virtual qubit and the second physical qubit corresponding to the second virtual qubit are also incapable to interact with each other directly in the physical quantum chip. If the virtual quantum circuit includes a quantum gate between the first virtual qubit and the second virtual qubit and the physical quantum circuit is generated according to the virtual quantum circuit, a logical operation of the quantum gate cannot be achieved between the first physical qubit and the second physical qubit in the physical quantum chip, resulting in failure when executing the quantum task.

Hence, the computer device needs to swap a state of the first virtual qubit (or the second virtual qubit) with a state of another virtual qubit. After the state swapping is completed, the logical operation is performed on the other virtual qubit. Quantum gates required in the process are combined according to their temporal operation sequence to obtain the equivalent gate unit. In all embodiments of the present disclosure, the equivalent gate unit may include at least two quantum gates.

In all embodiments of the present disclosure, the state swapping qubit-chain may be configured to swap states between a target virtual qubit and another virtual qubit in the virtual quantum chip. After the state swapping is completed, the other virtual qubit copies the original states of the target virtual qubit. The target virtual qubit may refer to any one of the first virtual qubit and the second virtual qubit, while the other virtual qubit refers to a virtual qubit other than the first virtual qubit and the second virtual qubit in the plurality of virtual qubits. For example, the target virtual qubit is first virtual qubit q[0], and the other virtual qubit is identified as q[3]. After the state swapping is completed, states of q[3] is converted into the original states of q[0], i.e., states of q[0] before the state swapping.

In all embodiments of the present disclosure, the state swapping qubit-chain may include at least one virtual qubit and starts from the target virtual qubit along a state swapping direction. The state swapping direction is a direction along which states of the target virtual qubits propagate along the qubit-chain. Any two adjacent virtual qubits included in the state swapping qubit-chain are directly connected.

For example, when the state swapping qubit-chain includes a plurality of virtual qubits, the target virtual qubit is at the head of the state swapping qubit-chain, and the state swapping direction indicates to the state swapping starts from the target virtual qubit, so that the states of the target virtual qubit propagate until the tail virtual qubit in the state swapping qubit-chain.

For example, if a state swapping qubit-chain is [target virtual qubit, virtual qubit 3, virtual qubit 5, virtual qubit 7], it indicates that the target virtual qubit and virtual qubit 3 are directly connected, virtual qubit 3 and virtual qubit 5 are directly connected, and virtual qubit 5 and virtual qubit 7 are directly connected. In other words, three times of state swapping may be performed to transfer the states of the target virtual qubit before the state swapping to states of virtual qubit 7.

The virtual qubits included in the state swapping qubit-chain all belong to the virtual quantum chip for the quantum task. Thereby, the quantum task can be executed through the partial structure in the physical quantum chip.

In all embodiments of the present disclosure, the computer device determining a state swapping qubit-chain according to the topology information may include: determining a first chain qubit directly connected with the target virtual quantum chip (e.g., the first virtual qubit) according to the topology information of the virtual quantum chip; determining a second chain qubit directly connected with the first chain qubit according to the topology information of the virtual quantum chip; in response to the second chain qubit being the second virtual qubit, generating the state swapping qubit-chain according to the first virtual qubit, the at least one chain qubit determined in this whole searching process, and the second virtual qubit; in response to the second chain qubit being not the second virtual qubit, repeated iterations of determining the second chain qubit as the new first chain qubit and determining a second chain qubit directly connected with the new first chain qubit according to the topology information of the virtual quantum chip, until the above case of the second chain qubit being the second virtual qubit is satisfied and then the generating operation is performed. The state swapping qubit-chain may be then divided to obtain a first state swapping qubit-chain starting from the first virtual qubit and a second state swapping qubit-chain starting the second virtual qubit. The tail virtual qubit in the first state swapping qubit-chain and the tail virtual qubit in the second state swapping qubit-chain are directly connected. The first chain qubit and the second chain qubit are virtual qubits included in the state swapping qubit-chain.

For example, the state swapping qubit-chain determined by the computer device is [first virtual qubit, virtual qubit 1, virtual qubit 2, virtual qubit 3, virtual qubit 4, second virtual qubit]. The computer device performs division between the virtual qubit 2 and the virtual qubit 3 in the state swapping qubit-chain, to obtain the first state swapping qubit-chain: [first virtual qubit, virtual qubit 1, virtual qubit 2], and the second state swapping qubit-chain: [second virtual qubit, virtual qubit 4, virtual qubit 3].

In the foregoing example, the computer device may further perform division between the virtual qubit 1 and the virtual qubit 2 in the state swapping qubit-chain, to obtain the first state swapping qubit-chain: [first virtual qubit, virtual qubit 1], and the second state swapping qubit-chain: [second virtual qubit, virtual qubit 4, virtual qubit 3, virtual qubit 2].

In the foregoing content, content of differentially determining the second gate unit corresponding to the first gate unit according to the difference connectivity conditions represented by the first information is described. When the first information indicates that the first virtual qubit and the second virtual qubit are directly connected, additional processing by the physical quantum chip may be unnecessary, and the second gate unit is determined to be identical to the first gate unit. When the first information indicates that the first virtual qubit and the second virtual qubit are not directly connected, to avoid additional logical operation by the physical quantum chip, state swapping needs to be from at least one target virtual qubit to another virtual qubit along the state swapping qubit-chain determined according to the topology information. In this way, direct logical operation is circumvented, and accuracy of logical operation is improved.

Because a swap-gate unit is required during the state swapping, a process of newly added gate unit may affect the execution result of the quantum task. In all embodiments of the present disclosure, the computer device may control a quantity of virtual qubits included in the state swapping qubit-chain when determining the state swapping qubit-chain, to reduce a quantity of required swap-gate units. For example, when a plurality of candidate state swapping qubit-chains exists between the first virtual qubit and the second virtual qubit, the computer device selects a candidate state swapping qubit-chain including a smallest quantity of virtual qubits from the plurality of state swapping qubit-chains, and then divide the state swapping qubit-chain to obtain the first state swapping qubit-chain and the second state swapping qubit-chain. In such manner, a quantity of required swap-gate units can be reduced, and an impact on the execution result of the quantum task can be reduced.

In all embodiments of the present disclosure, the computer device determining the at least one swap-gate unit according to the state swapping qubit-chain includes: establishing a respective swap-gate unit between each pair of two adjacent virtual qubits in the state swapping qubit-chain. The swap-gate unit is configured to swap states between the two virtual qubits that are directly connected.

In all embodiments of the present disclosure, the state swapping qubit-chain may include one or both of a first state swapping qubit-chain and a second state swapping qubit-chain. The first state swapping qubit-chain comprises at least one virtual qubit starting from the first virtual qubit, the second state swapping qubit-chain comprises at least one virtual qubit starting from the second virtual qubit, and a tail virtual qubit in the first state swapping qubit-chain and a tail virtual qubit in the second state swapping qubit-chain are capable to interact with each other directly (i.e., are directly connected). The computer device determining the at least one swap-gate unit according to the state swapping qubit-chain may include: determining, for each pair of adjacent virtual qubits in the state swapping qubit-chain, a respective swap-gate unit between the adjacent virtual qubits.

When any of first state swapping qubit-chain and a second state swapping qubit-chain includes only one virtual qubit, i.e., only the target virtual qubit, the target virtual qubit is regarded both a head virtual qubit (i.e., the starting virtual qubit) and a tail virtual qubit (i.e., the end virtual qubit). In such case, no swap-gate unit is required to established in such state swapping qubit-chain.

In all embodiments of the present disclosure, the swap-gate unit may be the SWAP gate for swapping states between virtual qubits. When the state swapping qubit-chain includes multiple pairs of adjacent virtual qubits, respective swap-gate units corresponding to the pairs of adjacent virtual qubits follow a temporal order of operation. For example, in the state swapping qubit-chain, the closer a virtual qubit is to a target virtual qubit, the earlier a swap-gate unit operating on such virtual bit operates, and the farther a virtual qubit is to a target virtual qubit, the later a swap-gate unit operating on such virtual bit operates. For example, if a state swapping qubit-chain is [second virtual qubit, virtual qubit a, virtual qubit b], the computer device determines swap-gate unit 1 between the second virtual qubit and virtual qubit a, and determines swap-gate unit b between virtual qubit a and virtual qubit b, where swap-gate unit a operates earlier than swap-gate unit b in the temporal operation order. Through the method, it is ensured that a state of the target virtual qubit can be swapped to a last virtual qubit in the state swapping qubit-chain, so that subsequent logical operation the same as the first gate unit is performed on the last virtual qubit in the chain, and the same function as the first gate unit can be generated.

For example, between different state swapping qubit-chains, a temporal operation order of the swap-gate units operating on virtual qubits is not limited. For example, the order between swap-gate unit 3 between virtual qubit 1 and virtual qubit 2 in the first state swapping qubit-chain and swap-gate unit 4 between virtual qubit 3 and virtual qubit 4 in the second state swapping qubit-chain is not limited. Swap-gate unit 3 may operate earlier than swap-gate unit 4 in time, or swap-gate unit 3 may operate later than swap-gate unit 4 in time, or swap-gate unit 3 and the swap-gate unit 4 may operate in parallel.

In all embodiments of the present disclosure, the equivalent gate unit may include at least one swap-gate unit and a first gate unit. A function of the swap-gate unit is described above. The first gate unit is configured to perform logical operation on the tail virtual qubit in the first state swapping qubit-chain and the tail virtual qubit in the second state swapping qubit-chain.

In the foregoing process, content of determining the swap-gate unit according to the state swapping qubit-chain is described. According to the virtual qubits included in the state swapping qubit-chain, one swap-gate unit is determined between any two adjacent virtual qubits. In addition, two state swapping qubit-chains are described. In the two state swapping circuits, swap-gate units may be determined according to adjacent virtual qubits. Because the states of the first virtual qubit can be swapped to the tail virtual qubit in the first state swapping qubit-chain, and the state of the second virtual qubit can be swapped to the tail virtual qubit in the second state swapping qubit-chain, the first gate unit is arranged between the tail virtual qubit in the first state swapping qubit-chain and the tail virtual qubit in the second state swapping qubit-chain. In this way, the same effect as that the first gate unit processes the first logical qubit and the second logical qubit in the logical quantum circuit can be achieved. Through the method, the logical operation equivalent to that of the first gate unit is implemented between the virtual qubits not directly connected, so that the quantum task can be smoothly executed.

Because newly added a quantum gate (such as the swap gate as described above) on a basis of the original logical quantum circuit may affect a running process of the physical quantum chip, the execution result of the quantum task may affected. For different quantum tasks, in the process of generating the virtual quantum circuit, the impact of whether to add new quantum gates on execution results is not exactly the same. Hence, whether to add a new quantum gate in the process of generating the virtual quantum circuit may be determined using an equivalence indicator.

In all embodiments of the present disclosure, before determining the state swapping qubit-chain according to the topology information, the method may further include: obtaining an equivalence indicator, where the equivalence indicator is configured to indicate whether at least one different gate unit is allowed between the logical quantum circuit and the virtual quantum circuit; determining the state swapping qubit-chain according to the topology information in response to the equivalence indicator indicating that the at least one different gate unit is allowed between the logical quantum circuit and the virtual quantum circuit; and presenting an error prompt in response to the equivalence indicator indicating that the at least one different gate unit is not allowed between the logical quantum circuit and the virtual quantum circuit, where the error prompt is configured to indicate that execution of the quantum task fails.

The allowability concerns indicating whether a different gate unit can exist. In other words, the equivalence indicator is configured for indicating whether the at least one different gate unit is allowed to exist between the logical quantum circuit and the virtual quantum circuit. The equivalence indicator includes: the at least one different gate unit being allowed between the logical quantum circuit and the virtual quantum circuit, and the at least one different gate unit being not allowed between the logical quantum circuit and the virtual quantum circuit.

For example, when the equivalence indicator indicates that the at least one different gate unit is not allowed between the logical quantum circuit and the virtual quantum circuit, the error prompt is presented, and the operation of determining the state swapping qubit-chain according to the topology information of the virtual quantum chip may not be performed.

In all embodiments of the present disclosure, the equivalence indicator may be configured for indicating whether a new gate unit can be added into the virtual quantum circuit in the process of generating the virtual quantum circuit. In all embodiments of the present disclosure, the equivalence indicator and the task indicator may be simultaneously sent to the computer device. As an alternative, when the computer device determines that a gate unit not existing in the logical quantum circuit needs to appear in the virtual quantum circuit, the computer device may send an equivalence query to the terminal device, and the equivalence query information is configured for querying whether the at least one different gate unit is allowed between the logical quantum circuit and the virtual quantum circuit. In response, the computer device receives the equivalence indicator sent by the terminal device.

In all embodiments of the present disclosure, in the process in which the computer device generates the virtual quantum circuit according to the logical quantum circuit, the computer device may obtain the equivalence indicator in response to the first information represents that the first virtual qubit and the second virtual qubit being not directly connected. When the equivalence indicator indicates the at least one different gate unit is allowed to exist between the logical quantum circuit and the virtual quantum circuit, the process goes to the computer device determining the state swapping qubit-chain according to the topology information of the virtual quantum chip. In other words, the computer device can generate the virtual quantum circuit according to the logical quantum circuit.

When the equivalence indicator indicates that the at least one different gate unit is not allowed between the logical quantum circuit and the virtual quantum circuit, the computer device may not perform the step of determining the state swapping qubit-chain according to the topology information of the virtual quantum chip and presents the error prompt indicating that the execution of the quantum task fails. In all embodiments of the present disclosure, the error prompt may be configured for prompting that the execution of the quantum task fails and that the execution result of the quantum task cannot be obtained.

In the foregoing process, the state swapping qubit-chain is determined according to the equivalence indicator representing whether the at least one different gate unit is allowed. When the equivalence indicator indicates that the at least one different gate unit is allowed between the logical quantum circuit and the virtual quantum circuit, the state swapping qubit-chain may be determined to determine the second gate unit. When the equivalence indicator indicates that the at least one different gate unit is not allowed between the logical quantum circuit and the virtual quantum circuit, the error prompt is fed back to show that the execution result cannot be obtained. Hence, it is determined whether a new gate unit can be added into the virtual quantum circuit on user's demand. In this way, through interference of the equivalence indicator, unacceptable impact on the execution result of the quantum task due to addition of the new gate unit can be avoided. Through the different manner of handling the state swapping qubit-chain, reliability of the execution result of the quantum task can be improved.

Example 2: Determining the second gate unit corresponding to the first gate unit which is a single-qubit gate.

In all embodiments of the present disclosure, sub-step 322 may include: in response to the first gate unit being configured to perform the logical operation on only one logical qubit, determining the second gate unit to be identical to the first gate unit.

Determining the second gate unit to be identical to the first gate unit refers to using a quantum gate of the same type as the first gate unit to perform a logical operation on the corresponding virtual qubit. Details may refer to the foregoing embodiments and are not repeated herein.

In the foregoing process, a manner of determining the second gate unit when the first gate unit is configured to perform logical operation on only logical qubit is described. When the first gate unit is configured to perform logical operation on only one logical qubit, other logical qubits are not relevant, and the second gate unit is determined directly to be identical to the first gate unit operating the logical qubit. In this way, the second gate unit can perform the target operation on the virtual qubit corresponding to the logical qubit, and efficiency of determining the second gate unit can be improved while accuracy of logical operation is not affected.

As an example, when generating the virtual quantum circuit, the computer device determines the respective second gate units corresponding to the first gate units in the logical quantum circuit according to the topology information of the virtual quantum chip. In the process, the computer device determines the second gate unit corresponding to the first gate unit according to the type of the first gate unit, and the generation may include following cases.

Case 1.0: When the first gate unit is configured to perform logical operation on only one logical qubit, the second gate unit is determined to be identical to the first gate unit operating the logical qubit.

Case 2.0: When the first gate unit is configured to perform logical operation on a first logical qubit and a second logical qubit, the computer device determines, according to the topology information of the virtual quantum chip, first information indicating whether a first virtual qubit and a second virtual qubit are directly connected, and determines the second gate unit i to be identical to the first gate unit when the first information indicates that the first virtual qubit and the second virtual qubit are directly connected.

Case 3.1: When the first gate unit is configured to perform logical operation on a first logical qubit and a second logical qubit, the computer device determines, according to the topology information of the virtual quantum chip, first information indicating whether a first virtual qubit and a second virtual qubit are directly connected. The computer device obtains an equivalence indicator when the first information indicates that the first virtual qubit and the second virtual qubit are not directly connected. When the equivalence indicator indicates that at least one different gate unit is allowed between the logical quantum circuit and the virtual quantum circuit, the computer device determines an equivalent gate unit of the first unit, and determines the equivalent gate unit to serve as the second gate unit. Details may referrer to the foregoing embodiments and are not repeated herein.

Case 3.2: When the first gate unit is configured to perform logical operation on a first logical qubit and a second logical qubit, the computer device determines, according to the topology information of the virtual quantum chip, first information indicating whether a first virtual qubit and a second virtual qubit are directly connected. The computer device obtains an equivalence indicator when the first information indicates that the first virtual qubit and the second virtual qubit are not directly connected. When the equivalence indicator indicates that at least one different gate unit is not allowed between the logical quantum circuit and the virtual quantum circuit, the computer device does not generate an equivalent gate unit of the first gate unit. The quantum task cannot be executed, and the computer device presents an error prompt, that is, it is prompted that the execution of the quantum task fails.

For Case 1.0, Case 2.0, and Case 3.1, the computer device generates the virtual quantum circuit of the quantum task according to the respective second gate units corresponding to the first gate units and the temporal sequence of the first gate units in the logical quantum circuit. The following describes a manner generating the physical quantum circuit through an embodiment. An execution entity of the operation may be the server.

In all embodiments of the present disclosure, step 330 may include the following several sub-steps 332 and 334.

In sub-step 332, the respective physical qubit of at least one virtual qubit in the virtual quantum chip is determined according to the qubit mapping.

Details of the qubit mapping may refer to the foregoing embodiments and are not repeated herein. In all embodiments of the present disclosure, the qubit mapping may be a mapping relationship between identifiers of the virtual qubits and identifiers of the physical qubits.

For example, for any virtual qubit included in the virtual quantum circuit, the computer device determines a physical qubit corresponding to the virtual qubit according to the qubit mapping and the identifier of such virtual qubit.

In sub-step 334, each virtual qubit in the virtual quantum circuit is replaced with the respective physical qubit of such virtual qubit to obtain the physical quantum circuit.

Because the virtual quantum chip and the respective partial structure of the virtual quantum chip in the physical quantum chip share the same topology relationship among qubits, a logical operation performed on a virtual qubit can be performed on a physical qubit corresponding to the virtual qubit. In other words, gate units included in the virtual quantum circuit and those in the physical quantum circuit are identical, and the computer device only needs to replace each virtual qubit in the virtual quantum circuit with the corresponding physical qubit to obtain the physical quantum circuit for executing the quantum task.

In the foregoing sub-step 332 and sub-step 334, a manner of obtaining the physical quantum circuit according to the qubit mapping is described. A correspondence between virtual qubits and physical qubits is fetched through the qubit mapping. Therefore, after the virtual quantum circuit and the virtual qubits in the virtual quantum circuit are determined, the respective physical qubits corresponding to the virtual qubits are determined according to the qubit mapping, so that the physical qubits are determined from the physical quantum chip, and the physical quantum circuit formed by theses physical qubits is generated by replacing the virtual qubits. Through the method, after the physical quantum chip is segmented into the plurality of virtual quantum chips, according to the known qubit mapping, the respective partial structure of the virtual quantum chip may be more quickly located in the physical quantum chip, and the physical quantum circuit corresponding to the partial structure may be generated. In this way, excessive execution operations are not introduced in the process of generating the execution result of the quantum task, and physical quantum circuits corresponding to different partial structures can also be generated in a more targeted manner, so that operating pressure of the computer device can be reduced when utilization of quantum computing resources is improved, and different quantum tasks can be executed in parallel through different partial structures in the physical quantum chip.

The following describes a process of generating the physical quantum circuit through one example.

FIG. 5 is a schematic structural diagram 510 of a virtual quantum chip according to an embodiment of the present disclosure. In this example, the virtual quantum chip is used to process a to-be-executed quantum task. The virtual quantum chip includes five virtual qubits: q[0], q[1], q[2], q[3], and q[4], where q[0] and q[1] are directly connected, q[1] and q[2] are directly connected, q[2] and q[4] are directly connected, and q[3] and q[4] are directly connected.

In step A10, the computer device obtains a logical quantum circuit of a to-be-executed quantum task. In one embodiment, operation A10 may include the following sub-steps.

A task indicator is obtained, where the task indicator is configured for indicating the to-be-executed quantum task. For each operation indicator included in the task indicator, a first gate unit corresponding to the operation indicator and at least one logical qubit on which the first gate unit is configured to perform a logical operation are determined. According to a temporal sequence of the operation indicators, which is indicated by the task indicator, the respective first gate units of the operation indicators are combined to generate the logical quantum circuit of the quantum task.

In this example, the task indicator is a quantum program formed by program instructions, which may be as follows:
QREG q[4];
H q[0];
CX q[0], q[1];
CX q[1], q[2];
CX q[2], q[3];
MEASZ q[0];
MEASZ q[1];
MEASZ q[3]; and
MEASZ q[4].

QREG q[4] indicates that four logical qubits are required for the to-be-executed quantum task, and q[0], q[1], q[2], and q[4] indicate the four logical qubits. "H" indicates an H gate, and "H q[0]" indicates logical operation performed by the H gate on the logical qubit q[0]. "CX" indicates a CNOT gate, and "CX q[i], q[j]" indicates logical operation performed by the CNOT gate on q[i] and q[j], where i=0 and j=1, or i=1 and j=2, or i=2 and j=3. "MEASZ" indicates observation on qubits. In one embodiment, an order of the program instructions in the quantum program determines the temporal sequence of gate units in the logical quantum circuit. For example, in the foregoing quantum program, H q[0] occurs before CX q[0], q[1], and CX q[0], q[1] occurs before CX q[1], q[2]. Because "MEASZ" does not involve performing a logical operation on a qubit and stands for measuring states of a logical qubit, an order among the "MEASZ"s is not limited.

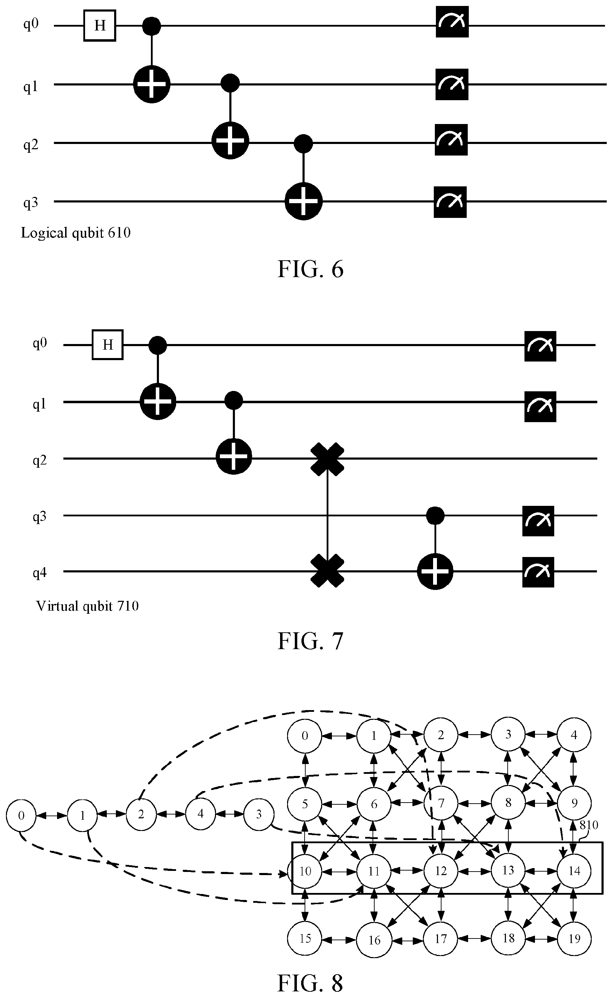

FIG. 6 is a schematic diagram of a logical quantum circuit according to an embodiment of the present disclosure. The logical quantum circuit includes a plurality of logical qubits 610: q[0], q[1], q[2], and q[3], and logic gates operating on the logical qubits.

In step A20, the computer device generates a virtual quantum circuit for the quantum task according to topology information of a virtual quantum chip and the logical quantum circuit.

In this step, the computer device needs to determine, according to the topology information of the virtual quantum chip, respective second gate units corresponding to first gate units in the logical quantum circuit. The computer device generates the virtual quantum circuit of the quantum task according to the respective second gate units corresponding to the first gate units and a temporal sequence of the first gate units in the logical quantum circuit.

FIG. 7 is a schematic diagram of a virtual quantum circuit according to an embodiment of the present disclosure. The virtual quantum circuit includes a plurality of virtual qubits 710: q[0], q[1], q[2], q[3], and q[4], and logic gates operating on the logical qubits.

As discussed above, in a process of generating the virtual quantum circuit, the second gate units corresponding to the first gate units in the logical quantum circuit need to be determined according to the topology information of the virtual quantum chip.

For an H gate on logical qubit q[0] in the logical quantum circuit, because the H gate is a single-qubit gate, the computer device determines directly that the H gate is arranged on a path starting from virtual qubit q[0].

For a CNOT gate between logical qubits q[0] and q[1] in the logical quantum circuit, because virtual qubits q[0] and q[1] are directly connected in the virtual quantum chip, the CNOT gate may be arranged between virtual qubits q[0] and q[1]. In other words, when the CNOT gate between logical qubits q[0] and q[1] in the logical quantum circuit serves as a first gate unit, the computer device determines the corresponding second gate unit identical to the first gate unit. Similarly, for a CNOT gate between logical qubits q[1] and q[2] in the logical quantum circuit, the CNOT gate is arranged between the virtual qubits q[1] and q[2] in the virtual quantum circuit.

For a CNOT gate between logical qubits q[2] and q[3] in the logical quantum circuit, in the virtual quantum chip, virtual qubits q[2] and q[3] are not directly connected, virtual qubits q[2] and q[4] are directly connected, and virtual qubits q[4] and q[3] are directly connected. Therefore, the computer device arranges a swap-gate unit between virtual qubits q[2] and q[4], and after states of virtual qubit q[2] is transferred to virtual qubit q[4], the computer device arranges a CNOT gate between virtual qubits q[3] and q[4].

In other words, when the CNOT gate between logical qubits q[2] and q[3] in the logical quantum circuit serves as the first gate unit, the computer device combines a swap gate between virtual qubits q[2] and q[4] and the CNOT gate unit between virtual qubits q[3] and q[4] to obtain the corresponding second gate unit.

FIG. 8 is a schematic diagram of a correspondence between a virtual quantum chip and a physical quantum chip according to an embodiment of the present disclosure.

As shown in FIG. 8, the virtual quantum chip in FIG. 5 corresponds to a respective partial structure 810 in the physical quantum chip in FIG. 8, where virtual qubit q[0] corresponds to physical qubit q[10], virtual qubit q[1] corresponds to physical qubit q[11], virtual qubit q[2] corresponds to physical qubit q[12], virtual qubit q[4] corresponds to physical qubit q[13], and virtual qubit q[3] corresponds to a physical qubit q[14].

In step A30, after generating the virtual quantum circuit, the computer device generates a physical quantum circuit according to the virtual quantum circuit and qubit mapping.

In this step, the computer device determines, according to the qubit mapping, respective physical qubits corresponding to at least one virtual qubit in the virtual quantum chip. The computer device replaces each virtual qubit in the virtual quantum circuit with the respective physical qubit corresponding to such virtual qubit to obtain the physical quantum circuit of the quantum task.

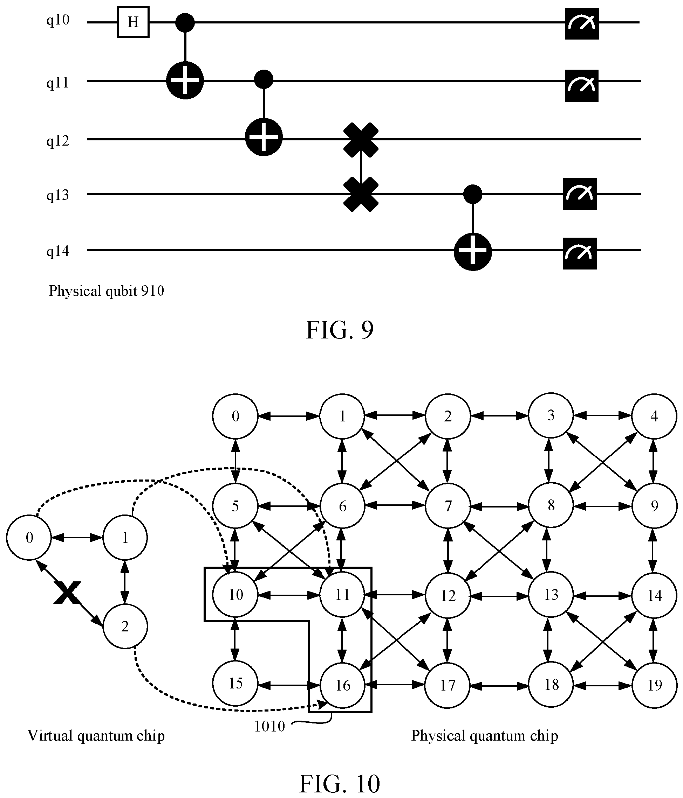

FIG. 9 is a schematic diagram of a physical quantum chip according to an embodiment of the present disclosure. The physical quantum chip includes chrome-plated physical qubits 910: q[10], q[11], q[12], q[13], and q[14].

In comparison with FIG. 9 and FIG. 8, it is not difficult to find that the physical quantum circuit can be obtained by merely replacing the virtual qubits in the virtual quantum circuit with the corresponding physical qubits.

After generating the physical quantum circuit, the computer device generates a corresponding instruction set according to the physical quantum circuit, and sends the instruction set to the physical quantum chip. The physical quantum chip operates according to the instruction set to obtain an execution result of the task.

In one embodiment, a first quantum task is executed through a physical quantum circuit constructed in a first partial structure of the physical quantum chip to obtain a first execution result of the first quantum task, and a second quantum task is executed through another physical quantum circuit constructed in a second partial structure of the physical quantum chip to obtain a second execution result of the second quantum task.

The first quantum task and the second quantum task are synchronously executed, different tasks. The first partial structure and the second partial structure are independent from each other in the physical quantum chip.

In all embodiments of the present disclosure, the independence may refer to that there is no overlapping physical qubit between the first partial structure and the second partial structure. For example, the first partial structure includes physical qubit 1 and physical qubit 2, and the second partial structure includes physical qubit 3 and physical qubit 4. A physical quantum circuit for executing first quantum task A is constructed in the first partial structure, and a physical quantum circuit for executing second quantum task B is constructed in the second partial structure.

In the foregoing process, a manner of executing a plurality of quantum tasks through the physical quantum chip is described. Respective physical quantum circuits corresponding to different quantum tasks are constructed in different partial structures of the physical quantum chip. The execution is implemented in in parallel execution (synchronous execution state). In parallel execution, the quantum tasks are respectively executed through different partial structures in the physical quantum chip to improve an execution speed of the quantum tasks and avoid tedious control of executing different quantum tasks through different physical quantum chips. The logic execution is integrated on a single physical quantum chip to facilitate maintenance of the physical quantum chip, and also facilitate differential adjustment of different partial structures, thereby improving logical operation efficiency.

Details may refer to the foregoing embodiments and is not repeated herein.

In conclusion, through the foregoing method, one physical quantum chip is segmented into a plurality of virtual quantum chips, so that the virtual quantum chips can execute different quantum tasks within the same period, and utilization of quantum computing resources and a response speed of a quantum service platform to a user request are improved without increasing a physical quantum chip.

The following describes a manner of segmenting the physical quantum chip through several embodiments.

In all embodiments of the present disclosure, the method for executing the quantum task may further include: obtaining a request for establishing the virtual quantum chip; determining, in response to the request, the qubit mapping and topology requirement for the virtual quantum chip, where the topology requirement is a requirement on topology relationship among the virtual qubits in the virtual quantum chip; and determining, for the virtual quantum chip, the partial structure in the physical quantum chip according to the qubit mapping and the topology requirement.

In all embodiments of the present disclosure, the request may be configured for requesting dividing the physical quantum chip and establishing a mapping relationship between the virtual quantum chip and the physical quantum chip. In all embodiments of the present disclosure the request may be provided by an operator maintaining the physical quantum chip, or provided by a user using a quantum computing server.

For example, the request includes at least one of the following: a chip identifier of the physical quantum chip, a chip identifier of the virtual quantum chip, second information configured for indicating the topology requirement, or third information configured for indicating the qubit mapping of the virtual quantum chip. The chip identifier of the physical quantum chip is configured for uniquely identifying the physical quantum chip, different physical quantum chips have different chip identifiers, the chip identifier of the virtual quantum chip is configured for uniquely identifying the virtual quantum chip, and different virtual quantum chips have different chip identifiers. The second information is a program segment configured for indicating the requirement on topology relationship, and the third information is a program segment configured for indicating the qubit mapping.

In all embodiments of the present disclosure, determining, by the computer device according to the request, the qubit mapping and topology requirement of the virtual quantum chip may include: performing format processing on the second information to obtain the topology requirement on the virtual quantum chip; and performing format processing on the third information to obtain the qubit mapping of the virtual quantum chip.

In the foregoing process, a manner of determining the respective partial structure of the virtual quantum chip in the physical quantum chip according to the request is described. After obtaining the request, the physical quantum chip is divided, and the mapping relationship between the virtual quantum chip and the physical quantum chip is established, to determine the qubit mapping and topology requirement of the virtual quantum chip according to the request and determine the respective partial structure of the virtual quantum chip from a plurality of partial structures corresponding to the segments of the physical quantum chip. The physical quantum chip is segmented according to the request, so that flexibility of the process of segmenting the physical quantum chip can be improved, and a virtual quantum chip having corresponding topology information can be generated according to an actual need.

In all embodiments of the present disclosure, determining, for the virtual quantum chip, the partial structure in the physical quantum chip according to the qubit mapping and the topology requirement may include: determining, from the physical quantum chip according to the qubit mapping, the physical qubits mapped to the virtual qubits, respectively, in the virtual quantum chip; determining, in response to the determined physical qubits being all in an unoccupied state, topology relationship among the determined physical qubits from physical topology relationship among all physical qubits of the physical quantum chip; and determining, in response to the topology relationship among the determined physical qubits meeting the topology requirement, a part of the physical quantum chip that comprises the determined physical qubits to serve as the partial structure.

In all embodiments of the present disclosure, after the above steps, the computer device may adjust a state of each physical qubits included in the partial structure in the physical quantum chip to be an occupied state.

In all embodiments of the present disclosure, the computer device may determine whether the topology relationship among the determined physical qubits meets the topology requirement. The computer device determines, in a case that the topology relationship among the determined physical qubits meets the topology requirement, a part of the physical quantum chip (e.g., one candidate partial structure) including the determined physical qubits in the physical quantum chip as the partial structure for the virtual quantum chip in the physical quantum chip. In a case that the topology relationship among the determined physical qubits does not meet the topology requirement, the computer device does not map the partial structure in the physical quantum chip to the virtual quantum chip.

In the foregoing process, a manner of determining the corresponding partial structure from the physical quantum chip is described. The respective physical qubits corresponding to the plurality of virtual qubits in the virtual quantum chip are determined from the physical quantum chip according to the qubit mapping, to avoid participation of current physical qubits in a process of executing other quantum tasks and interference with the other quantum tasks when the physical qubits are in the occupied state. In addition, when the physical qubits are in the unoccupied state, whether the topology relationship between the plurality of physical qubits meets the topology requirement corresponding to the request is determined. When the topology requirement is met, the part including the plurality of physical qubits is determined as the required partial structure, thereby improving accuracy of determining the partial structure based on the request.

The following describes a method for mapping the virtual quantum chip through two examples.

FIG. 10 is a schematic diagram of a process of mapping a virtual quantum chip according to an embodiment of the present disclosure.

As shown in FIG. 10, the virtual quantum chip includes virtual qubits q[0], q[1], and q[2]. Topology requirement of the virtual quantum chip is that virtual qubits q[0] and q[1] are directly connected, virtual qubits q[1] and q[2] are directly connected, and virtual qubits q[0] and q[2] are directly connected. Qubit mapping includes: virtual qubit q[0] corresponds to physical qubit q[10], virtual qubit q[1] corresponds to physical qubit q[11], and virtual qubit q[2] corresponds to physical qubit q[16].

Referring to a physical topology of a physical quantum chip on the right side of FIG. 10, determined physical qubits are in a partial structure 1010, where the physical qubits q[10] and q[11] are directly connected, the physical qubits q[11] and q[16] are directly connected, but the physical qubits q[10] and q[16] are not directly connected. Therefore, the computer device determines that a topology relationship among the determined physical qubits does not meet the topology requirement. Therefore, the virtual quantum chip cannot be obtained through dividing the physical quantum chip.

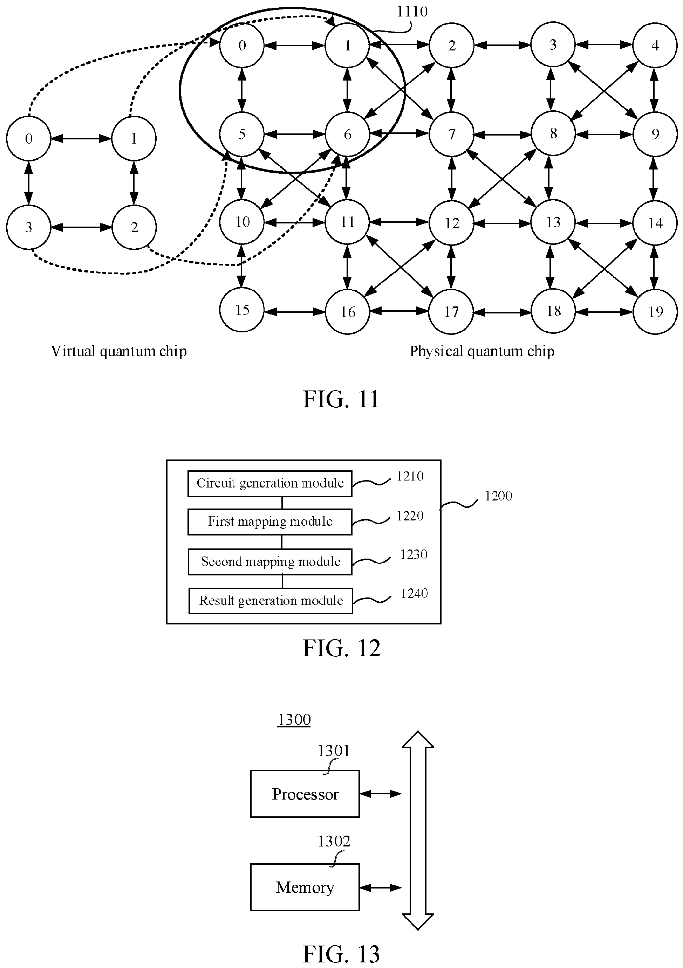

FIG. 11 is a schematic diagram of a process of mapping a virtual quantum chip according to another embodiment of the present disclosure.

As shown in FIG. 11, the virtual quantum chip includes virtual qubits q[0], q[1], q[2], and q[3]. Topology requirement of the virtual quantum chip is that virtual qubits q[0] and q[1] are directly connected, virtual qubits q[1] and q[2] are directly connected, virtual qubits q[2] and q[3] are directly connected, and virtual qubits q[0] and q[3] are directly connected. Qubit mapping includes: virtual qubit q[0] corresponds to physical qubit q[0], virtual qubit q[1] corresponds to physical qubit q[1], virtual qubit q[3] corresponds to physical qubit q[5], and virtual qubit q[2] corresponds to physical qubit q[6].

Referring to a physical topology of a physical quantum chip on the right side of FIG. 11, determined physical qubits are in a partial structure 1110, where the physical qubits q[0] and q[1] are directly connected, the physical qubits q[0] and q[5] are directly connected, the physical qubits q[1] and q[6] are directly connected, and the physical qubits q[6] and q[5] are directly connected. Therefore, the computer device determines that a topology relationship among the determined physical qubits meets the topology requirement, and the virtual quantum chip can be obtained by segmenting the physical quantum chip.

The following describes a process of executing the quantum task provided in the present disclosure through one example.

In step B10, the computer device obtains a request for establishing a virtual quantum chip, and determines, according to the request, qubit mapping and topology requirement of the virtual quantum chip.

In step B20, the computer device: determines, according to the qubit mapping of the virtual quantum chip, physical qubits in a physical quantum chip that are mapped to virtual qubits in the virtual quantum chip; determines, when the determined physical qubits are all in an unoccupied state, a topology relationship among the determined physical qubits according to a physical topology relationship among all physical qubits of the physical quantum chip; and determines, if the topology relationship among the determined physical qubits meets the topology requirement, a part including the determined physical qubits in the physical quantum chip as the respective partial structure of the virtual quantum chip in the physical quantum chip.

After the physical quantum chip is divided for the virtual qubits, the process of executing the quantum task is started.

In step B30, the computer device: obtains a task indicator; determines, for each operation indicators included in the task indicator, a first gate unit for such operation indicator and at least one logical qubit on which the first gate unit is configured to perform a logical operation; and connects, according to a temporal sequence of the operation indicators, which is included in the task indicator, the respective first gate units corresponding to the operation indicators to generate a logical quantum circuit of the quantum task.

In step B40, the computer device determines, according to topology information of the virtual quantum chip, respective second gate units corresponding to the first gate units in the logical quantum circuit. This step includes a plurality of cases and corresponding determining processes. Details may refer to foregoing embodiments and are not repeated herein.

In step B50, the computer device generates a virtual quantum circuit of the quantum task according to the respective second gate units corresponding to the first gate units and a temporal sequence of the first gate units in the logical quantum circuit.

In step B60, the computer device determines, according to the qubit mapping, respective physical qubits corresponding to at least one virtual qubit in the virtual quantum chip, and replaces each virtual qubit in the virtual quantum circuit with the respective physical qubit corresponding to such virtual qubit, to obtain a physical quantum circuit for the quantum task.

In step B70, the computer device executes the quantum task through the physical quantum circuit constructed in the partial structure of the physical quantum chip to obtain an execution result of the quantum task. Details may refer to foregoing embodiments and are not repeated herein for brevity.

Through the method, one physical quantum chip corresponds to a plurality of virtual quantum chips, and the virtual quantum chips limit physical qubits required to execute quantum tasks, to avoid interference between execution processes of two quantum tasks caused when a same physical qubit is involved in the two quantum tasks within the same time period; and a physical topology between the qubits is relieved, so that the physical quantum chip can simultaneously execute a plurality of quantum tasks, thereby improving efficiency of utilization of quantum computing resources, and improving a response speed of the quantum tasks.

FIG. 12 is a block diagram of an apparatus for executing a quantum task according to an embodiment of the present disclosure. An apparatus 1200 may include: a circuit generation module 1210, a first mapping module 1220, a second mapping module 1230, and a result generation module 1240.

The circuit generation module 1210 is configured to obtain a logical quantum circuit, where the logical quantum circuit is an abstract logic circuit configured to execute the quantum task.

The first mapping module 1220 is configured to generate a virtual quantum circuit for the quantum task according to topology information of a virtual quantum chip and the logical quantum circuit. The virtual quantum chip represents a partial structure of a physical quantum chip, the topology information indicates topology relationship among all virtual qubits in the virtual quantum chip, and the virtual quantum circuit is a circuit constructed using at least a part of the virtual qubits.

The second mapping module 1230 is configured to generate a physical quantum circuit for the quantum task according to the virtual quantum circuit and qubit mapping between the virtual quantum chip and the physical quantum chip. The qubit mapping indicates a respective physical qubit, of the physical quantum chip, represented by each of the virtual qubits.

The result generation module 1240 is configured to execute the quantum task through the physical quantum circuit constructed in the partial structure of the physical quantum chip to obtain an execution result of the quantum task.

In some embodiments, the result generation module 1240 is further configured to: execute a first quantum task through a part of the physical quantum circuit constructed in a first partial structure of the physical quantum chip to obtain a first execution result of the first quantum task; and execute a second quantum task through another part of the physical quantum circuit constructed in a second partial structure of the physical quantum chip to obtain a second execution result of the second quantum task. The first quantum task and the second quantum task are different tasks and are synchronously executed, and the first partial structure and the second partial structure are independent from each other in the physical quantum chip.

In some embodiments, the first mapping module 1220 further includes a gate unit generation sub-module and a circuit generation sub-module. The gate unit generation sub-module is configured to determine, according to the topology information, a respective second gate unit for each first gate unit in the logical quantum circuit. Each first gate unit is a quantum gate configured to perform a respective logical operation on states of logical qubits in the logical quantum circuit, and the respective second gate unit for said first gate unit is a quantum gate configured to perform the same logical operation on states of the virtual qubits. The circuit generation sub-module is configured to generate the virtual quantum circuit for the quantum task according to the respective second gate unit for each first gate unit and a temporal sequence of the first gate units in the logical quantum circuit.

In some embodiments, the gate unit generation sub-module includes an information determining unit and a gate determining unit. The information determining unit is configured to: determine, from the topology information, first information indicating connectivity between a first virtual qubit and a second virtual qubit, in response to a first gate unit being configured to perform the logical operation on a first logical qubit and a second logical qubit. The first virtual qubit is a counterpart of the first logical qubit in the virtual quantum chip, and the second virtual qubit is a counterpart of the second logical qubit in the virtual quantum chip. The gate determining unit is configured to determine the respective second gate unit of the first gate unit according to the first information.

In some embodiments, the information determining unit includes a first sub-unit and a second sub-unit. The first sub-unit is configured to determine the second gate unit to be identical to the first gate unit in response to the first information indicating that the first virtual qubit and the second virtual qubit are capable to interact with each other directly. The second sub-unit is configured to, in response to the first information indicating that the first virtual qubit and the second virtual qubit are not capable to interact with each other directly: determine a state swapping qubit-chain according to the topology information, where the state swapping qubit-chain is configured for at least one of: swapping states between the first virtual qubit and another qubit, or swapping states between the second virtual qubit and another qubit; determine at least one swap-gate unit according to the state swapping qubit-chain; and combine the at least one swap-gate unit and the first gate unit to obtain an equivalent gate unit, where the equivalent gate unit serves as the second gate unit. The swap-gate unit is configured to swap states between two qubits serving as inputs of the swap-gate unit, and the at least one swap-gate unit operates temporally previous to the first gate unit in the equivalent gate unit.

In some embodiments, the second sub-unit is configured to determine, for each pair of adjacent virtual qubits in the state swapping qubit-chain, a respective swap-gate unit between the adjacent virtual qubits. The state swapping qubit-chain comprise one or both of a first state swapping qubit-chain and a second state swapping qubit-chain, the first state swapping qubit-chain comprises at least one virtual qubit comprising the first virtual qubit, the second state swapping qubit-chain comprises at least one virtual qubit comprising the second virtual qubit, and a tail virtual qubit in the first state swapping qubit-chain and a tail virtual qubit in the second state swapping qubit-chain are capable to interact with each other directly.

In some embodiments, the apparatus 1200 further includes an information determining module. The information determining module is configured to: obtain an equivalence indicator, where the equivalence indicator is configured to indicate whether at least one different gate unit is allowed between the logical quantum circuit and the virtual quantum circuit; determine the state swapping qubit-chain according to the topology information in response to the equivalence indicator indicating that the at least one different gate unit is allowed between the logical quantum circuit and the virtual quantum circuit; and present an error prompt in response to the equivalence indicator indicating that the at least one different gate unit is not allowed between the logical quantum circuit and the virtual quantum circuit, where the error prompt is configured to indicate that execution of the quantum task fails.

In some embodiments, the gate unit generation sub-module is configured to: in response to the first gate unit being configured to perform the logical operation on only one logical qubit, determine the second gate unit to be identical to the first gate unit.

In some embodiments, the circuit generation module 1210 is configured to: obtain a task indicator configured to indicate the quantum task to be executed; determine, for each operation indicator comprised in the task indicator, a respective first gate unit and at least one logical qubit, where the first gate unit is configured to perform a logical operation on states of the at least one logical qubit; and connect the respective first gate units of all the operation indicators according to a temporal sequence of the operation indicators to generate the logical quantum circuit, where the temporal sequence of the operation indicators is indicated by the task indicator.

In some embodiments, the apparatus 1200 further includes an information obtaining module, an information determining module, and a chip mapping module. The information obtaining module is configured to obtain a request for establishing the virtual quantum chip. The information determining module is configured to determine, in response to the request, the qubit mapping and topology requirement for the virtual quantum chip, where the topology requirement is a requirement on topology relationship among the virtual qubits in the virtual quantum chip. The chip mapping module is configured to determine, for the virtual quantum chip, the partial structure in the physical quantum chip according to the qubit mapping and the topology requirement.

In some embodiments, the chip mapping module is configured to: determine, from the physical quantum chip according to the qubit mapping, the physical qubits mapped to the virtual qubits, respectively, in the virtual quantum chip; determine, in response to the determined physical qubits being all in an unoccupied state, topology relationship among the determined physical qubits from physical topology relationship among all physical qubits of the physical quantum chip; and determine, in response to the topology relationship among the determined physical qubits meeting the topology requirement, a part of the physical quantum chip that comprises the determined physical qubits to serve as the partial structure.

In some embodiments, the second mapping module 1230 is configured to: determine, according to the qubit mapping, the respective physical qubit of at least one virtual qubit in the virtual quantum chip; and replace each virtual qubit in the virtual quantum circuit with the respective physical qubit of said virtual qubit to obtain the physical quantum circuit.

When the apparatus provided in the above embodiments implements functions of the apparatus, the division of the above functional modules is merely an example for description. In the practical application, the functions may be assigned to and completed by different functional modules according to the requirements, that is, the internal structure of the device is divided into different functional modules, to implement all or some of the functions described above. In addition, the apparatuses provided in the foregoing embodiments and the method embodiments fall within a same conception. For details of a specific implementation process, refer to the method embodiments. Details are not described herein again. For beneficial effects of the apparatus in the foregoing embodiments, refer to descriptions of the method embodiments. Details are not described herein again.

FIG. 13 is a structural block diagram of a computer device according to an embodiment of the present disclosure. Generally, a computer device 1300 includes a processor 1301 and a memory 1302.

The processor 1301 may include one or more processing cores. For example, the processor 1301 may be a 4-core processor or a 13-core processor.

The memory 1302 may include one or more computer-readable storage media. The computer-readable storage medium may be tangible and non-transient. The memory 1302 may further include a high-speed random-access memory and a non-volatile memory, for example, one or more disk storage devices or flash storage devices. In some embodiments, a non-transitory computer-readable storage medium in the memory 1302 has at least one program stored therein, the at least one program being configured to be executed by the processor 1301 to implement the method for executing a quantum task provided in the foregoing method embodiments.

An embodiment of the present disclosure further provides a computer-readable storage medium storing a computer program. The computer program when loaded and executed by a processor implements the method for executing the quantum task provided in the foregoing method embodiments.

The computer-readable medium may include a computer storage medium and a communication medium. The computer storage medium includes volatile and non-volatile media, and removable and non-removable media implemented by using any method or technology and configured to store information such as a computer-readable instruction, a data structure, a program module, or other data.

An embodiment of the present disclosure further provides a computer program product including a computer program. The computer program is stored in a computer-readable storage medium, and a processor when reading the computer program from the computer-readable storage medium and executing the computer program implements the method for executing the quantum task provided in the foregoing method embodiments.

"Plurality of" mentioned in this specification means two or more. The term "and/or" describes an association relationship for describing associated objects and represents that three relationships may exist. For example, A and/or B may represent the following three cases: Only A exists, both A and B exist, and only B exists. The character "/" in this specification generally indicates an "or" relationship between the associated objects.

"Plurality of" mentioned in this specification means two or more. In addition, the operation numbers described in this specification merely exemplarily show a possible execution sequence of the operations. In some other embodiments, the operations may not be performed according to the number sequence. For example, two operations with different numbers may be performed simultaneously, or two operations with different numbers may be performed according to a sequence contrary to the sequence shown in the figure.

## Claims

1. A method for executing a quantum computing task, applicable to a computer device, the method comprising:
obtaining (310) a logical quantum circuit, wherein the logical quantum circuit is an abstract logic circuit configured to execute the quantum computing task and comprises logical qubits and quantum gates, and the quantum gates are configured to perform respective logical operations on the logical qubits;
selecting a virtual quantum chip for the quantum computing task from a plurality of virtual quantum chips, wherein the logical quantum circuit is capable of being implemented by topology of virtual qubits in the selected virtual quantum chip, each virtual quantum chip among the plurality of virtual quantum chips is mapped to a respective partial structure of a physical quantum chip, the respective partial structures of the plurality of virtual quantum chips do not have overlapping qubits in the physical quantum chip;
generating (320) a virtual quantum circuit for the quantum computing task according to topology information of the virtual quantum chip and the logical quantum circuit, wherein the topology information indicates topology relationship among all virtual qubits in the virtual quantum chip, and the virtual quantum circuit is a circuit constructed using at least a part of the virtual qubits;
generating (330) a physical quantum circuit for the quantum computing task according to the virtual quantum circuit and qubit mapping between the virtual quantum chip and the physical quantum chip, wherein the qubit mapping indicates a respective physical qubit, of the physical quantum chip, represented by each of the virtual qubits; and
executing (340) the quantum computing task through the physical quantum circuit constructed in the partial structure of the physical quantum chip to obtain an execution result of the quantum computing task;
wherein executing (340) the quantum computing task through the physical quantum circuit constructed in the partial structure of the physical quantum chip to obtain the execution result of the quantum computing task comprises:
executing a first quantum computing task through a part of the physical quantum circuit constructed in a first partial structure of the physical quantum chip to obtain a first execution result of the first quantum computing task; and
executing a second quantum computing task through another part of the physical quantum circuit constructed in a second partial structure of the physical quantum chip to obtain a second execution result of the second quantum computing task;
wherein the first quantum computing task and the second quantum computing task are different tasks and are synchronously executed, and the first partial structure and the second partial structure are independent from each other in the physical quantum chip;
wherein generating (320) the virtual quantum circuit for the quantum computing task according to the topology information of the virtual quantum chip and the logical quantum circuit comprises:
determining, according to the topology information, a respective second gate unit for each first gate unit in the logical quantum circuit, wherein each first gate unit is a quantum gate configured to perform a respective logical operation on states of logical qubits in the logical quantum circuit, and the second gate unit for said first gate unit is a quantum gate configured to perform the same logical operation on states of the virtual qubits; and
generating the virtual quantum circuit for the quantum computing task according to the respective second gate unit for each first gate unit and a temporal sequence of the first gate units in the logical quantum circuit; and
wherein generating (330) the physical quantum circuit for the quantum computing task according to the virtual quantum circuit and the qubit mapping between the virtual quantum chip and the physical quantum chip comprises:
determining, according to the qubit mapping, the respective physical qubit of at least one virtual qubit in the virtual quantum chip; and
replacing each virtual qubit in the virtual quantum circuit with the respective physical qubit of said virtual qubit to obtain the physical quantum circuit.

2. The method according to claim 1, wherein determining, according to the topology information, a respective second gate unit for each first gate unit in the logical quantum circuit comprises:
in response to a first gate unit being configured to perform the logical operation on a first logical qubit and a second logical qubit,
determining, from the topology information, first information indicating connectivity between a first virtual qubit and a second virtual qubit, wherein the first virtual qubit is a counterpart of the first logical qubit in the virtual quantum chip, and the second virtual qubit is a counterpart of the second logical qubit in the virtual quantum chip; and
determining the respective second gate unit of the first gate unit according to the first information.

3. The method according to claim 2, wherein determining the respective second gate unit of the first gate unit according to the first information comprises:
determining the second gate unit to be identical to the first gate unit in response to the first information indicating that the first virtual qubit and the second virtual qubit are capable to interact with each other directly; and
in response to the first information indicating that the first virtual qubit and the second virtual qubit are not capable to interact with each other directly,
determining a state swapping qubit-chain according to the topology information, wherein the state swapping qubit-chain is configured for at least one of: swapping states between the first virtual qubit and another qubit, or swapping states between the second virtual qubit and another qubit;
determining at least one swap-gate unit according to the state swapping qubit-chain; and
combining the at least one swap-gate unit and the first gate unit to obtain an equivalent gate unit, wherein the equivalent gate unit serves as the second gate unit;
wherein the swap gate unit is configured to swap states between two qubits serving as inputs of the swap gate unit, and the at least one swap-gate unit operates temporally previous to the first gate unit in the equivalent gate unit.

4. The method according to claim 3, wherein determining the at least one swap-gate unit according to the state swapping qubit-chain comprises:
determining, for each pair of adjacent virtual qubits in the state swapping qubit-chain, a respective swap-gate unit between the adjacent virtual qubits,
wherein the state swapping qubit-chain comprise one or both of a first state swapping qubit-chain and a second state swapping qubit-chain, the first state swapping qubit-chain comprises at least one virtual qubit comprising the first virtual qubit, the second state swapping qubit-chain comprises at least one virtual qubit comprising the second virtual qubit, and a tail virtual qubit in the first state swapping qubit-chain and a tail virtual qubit in the second state swapping qubit-chain are capable to interact with each other directly.

5. The method according to claim 3, wherein before determining the state swapping qubit-chain according to the topology information, the method further comprises:
obtaining an equivalence indicator, wherein the equivalence indicator is configured to indicate whether at least one different gate unit is allowed between the logical quantum circuit and the virtual quantum circuit;
determining the state swapping qubit-chain according to the topology information in response to the equivalence indicator indicating that the at least one different gate unit is allowed between the logical quantum circuit and the virtual quantum circuit; and
presenting an error prompt in response to the equivalence indicator indicating that the at least one different gate unit is not allowed between the logical quantum circuit and the virtual quantum circuit, wherein the error prompt is configured to indicate that execution of the quantum computing task fails.

6. The method according to claim 1, wherein determining, according to the topology information, the second gate units for first gate units, respectively, that are in the logical quantum circuit comprises:
in response to the first gate unit being configured to perform the logical operation on only one logical qubit,
determining the second gate unit to be identical to the first gate unit.

7. The method according to any one of claims 1 to 6, wherein obtaining (310) the logical quantum circuit comprises:
obtaining a task indicator configured to indicate the quantum computing task to be executed;
determining, for each operation indicator comprised in the task indicator, a respective first gate unit and at least one logical qubit, wherein the first gate unit is configured to perform a logical operation on states of the at least one logical qubit; and
connecting the respective first gate units of all the operation indicators according to a temporal sequence of the operation indicators to generate the logical quantum circuit, wherein the temporal sequence of the operation indicators is indicated by the task indicator.

8. The method according to any one of claims 1 to 7, further comprising:
obtaining a request for establishing the virtual quantum chip;
determining, in response to the request, the qubit mapping and topology requirement for the virtual quantum chip, wherein the topology requirement is a requirement on topology relationship among the virtual qubits in the virtual quantum chip; and
determining, for the virtual quantum chip, the partial structure in the physical quantum chip according to the qubit mapping and the topology requirement.

9. The method according to claim 8, wherein determining, for the virtual quantum chip, the partial structure in the physical quantum chip according to the qubit mapping and the topology requirement comprises:
determining, from the physical quantum chip according to the qubit mapping, the physical qubits mapped to the virtual qubits, respectively, in the virtual quantum chip;
determining, in response to the determined physical qubits being all in an unoccupied state, topology relationship among the determined physical qubits from physical topology relationship among all physical qubits of the physical quantum chip; and
determining, in response to the topology relationship among the determined physical qubits meeting the topology requirement, a part of the physical quantum chip that comprises the determined physical qubits to serve as the partial structure.

10. A computer device, comprising a processor and a memory, wherein the memory stores a computer program, and the computer program when loaded and executed by the processor implements the method according to any one of claims 1 to 9.

11. A computer-readable storage medium, storing a computer program, wherein the computer program when loaded and executed by a processor implements the method according to any one of claims 1 to 9.

12. A computer program product, comprising a computer program, wherein the computer program is stored in a computer-readable storage medium, and a processor when reading the computer program from the computer-readable storage medium and executing the computer program implements the method according to any one of claims 1 to 9.

## Patentansprüche

1. Verfahren zum Ausführen einer Quantenberechnungsaufgabe, anwendbar auf eine Computervorrichtung, wobei das Verfahren umfasst:
Erhalten (310) einer logischen Quantenschaltung, wobei die logische Quantenschaltung eine abstrakte Logikschaltung ist, die konfiguriert ist, die Quantenberechnungsaufgabe auszuführen, und logische Qubits und Quantengatter umfasst, und die Quantengatter konfiguriert sind, jeweilige logische Operationen an den logischen Qubits durchzuführen;
Auswählen eines virtuellen Quantenchips für die Quantenberechnungsaufgabe aus einer Mehrzahl von virtuellen Quantenchips, wobei die logische Quantenschaltung durch eine Topologie von virtuellen Qubits in dem ausgewählten virtuellen Quantenchip implementierbar ist, jeder virtuelle Quantenchip unter der Mehrzahl von virtuellen Quantenchips auf eine jeweilige Teilstruktur eines physischen Quantenchips abgebildet ist, die jeweiligen Teilstrukturen der Mehrzahl von virtuellen Quantenchips keine sich überlappenden Qubits in dem physischen Quantenchip aufweisen;
Erzeugen (320) einer virtuellen Quantenschaltung für die Quantenberechnungsaufgabe gemäß Topologieinformationen des virtuellen Quantenchips und der logischen Quantenschaltung, wobei die Topologieinformationen eine Topologiebeziehung zwischen allen virtuellen Qubits in dem virtuellen Quantenchip angeben, und die virtuelle Quantenschaltung eine Schaltung ist, die unter Verwendung mindestens eines Teils der virtuellen Qubits konstruiert ist;
Erzeugen (330) einer physischen Quantenschaltung für die Quantenberechnungsaufgabe gemäß der virtuellen Quantenschaltung und einer Qubit-Abbildung zwischen dem virtuellen Quantenchip und dem physischen Quantenchip, wobei die Qubit-Abbildung ein jeweiliges physisches Qubit des physischen Quantenchips angibt, das durch jedes der virtuellen Qubits repräsentiert wird; und
Ausführen (340) der Quantenberechnungsaufgabe mittels der physischen Quantenschaltung, die in der Teilstruktur des physischen Quantenchips konstruiert ist, um ein Ausführungsergebnis der Quantenberechnungsaufgabe zu erhalten;
wobei das Ausführen (340) der Quantenberechnungsaufgabe mittels der physischen Quantenschaltung, die in der Teilstruktur des physischen Quantenchips konstruiert ist, um das Ausführungsergebnis der Quantenberechnungsaufgabe zu erhalten, umfasst:
Ausführen einer ersten Quantenberechnungsaufgabe mittels eines Teils der physischen Quantenschaltung, der in einer ersten Teilstruktur des physischen Quantenchips konstruiert ist, um ein erstes Ausführungsergebnis der ersten Quantenberechnungsaufgabe zu erhalten; und
Ausführen einer zweiten Quantenberechnungsaufgabe mittels eines anderen Teils der physischen Quantenschaltung, der in einer zweiten Teilstruktur des physischen Quantenchips konstruiert ist, um ein zweites Ausführungsergebnis der zweiten Quantenberechnungsaufgabe zu erhalten;
wobei die erste Quantenberechnungsaufgabe und die zweite Quantenberechnungsaufgabe verschiedene Aufgaben sind und synchron ausgeführt werden, und die erste Teilstruktur und die zweite Teilstruktur in dem physischen Quantenchip voneinander unabhängig sind;
wobei das Erzeugen (320) der virtuellen Quantenschaltung für die Quantenberechnungsaufgabe gemäß den Topologieinformationen des virtuellen Quantenchips und der logischen Quantenschaltung umfasst:
Bestimmen, gemäß den Topologieinformationen, einer jeweiligen zweiten Gattereinheit für jede erste Gattereinheit in der logischen Quantenschaltung, wobei jede erste Gattereinheit ein Quantengatter ist, das konfiguriert ist, eine jeweilige logische Operation an Zuständen von logischen Qubits in der logischen Quantenschaltung durchzuführen, und die zweite Gattereinheit für die genannte erste Gattereinheit ein Quantengatter ist, das konfiguriert ist, dieselbe logische Operation an Zuständen der virtuellen Qubits durchzuführen; und
Erzeugen der virtuellen Quantenschaltung für die Quantenberechnungsaufgabe gemäß der jeweiligen zweiten Gattereinheit für jede erste Gattereinheit und einer zeitlichen Reihenfolge der ersten Gattereinheiten in der logischen Quantenschaltung; und
wobei das Erzeugen (330) der physischen Quantenschaltung für die Quantenberechnungsaufgabe gemäß der virtuellen Quantenschaltung und der Qubit-Abbildung zwischen dem virtuellen Quantenchip und dem physischen Quantenchip umfasst:
Bestimmen, gemäß der Qubit-Abbildung, des jeweiligen physischen Qubits mindestens eines virtuellen Qubits in dem virtuellen Quantenchip; und
Ersetzen jedes virtuellen Qubits in der virtuellen Quantenschaltung durch das jeweilige physische Qubit des genannten virtuellen Qubits, um die physische Quantenschaltung zu erhalten.

2. Verfahren nach Anspruch 1, wobei das Bestimmen, gemäß den Topologieinformationen, einer jeweiligen zweiten Gattereinheit für jede erste Gattereinheit in der logischen Quantenschaltung umfasst:
in Reaktion darauf, dass eine erste Gattereinheit konfiguriert ist, die logische Operation an einem ersten logischen Qubit und einem zweiten logischen Qubit durchzuführen,
Bestimmen, aus den Topologieinformationen, einer ersten Information, die eine Konnektivität zwischen einem ersten virtuellen Qubit und einem zweiten virtuellen Qubit angibt, wobei das erste virtuelle Qubit ein Gegenstück des ersten logischen Qubits in dem virtuellen Quantenchip ist, und das zweite virtuelle Qubit ein Gegenstück des zweiten logischen Qubits in dem virtuellen Quantenchip ist; und
Bestimmen der jeweiligen zweiten Gattereinheit der ersten Gattereinheit gemäß der ersten Information.

3. Verfahren nach Anspruch 2, wobei das Bestimmen der jeweiligen zweiten Gattereinheit der ersten Gattereinheit gemäß der ersten Information umfasst:
Bestimmen der zweiten Gattereinheit als identisch mit der ersten Gattereinheit in Reaktion darauf, dass die erste Information angibt, dass das erste virtuelle Qubit und das zweite virtuelle Qubit in der Lage sind, direkt miteinander zu interagieren; und
in Reaktion darauf, dass die erste Information angibt, dass das erste virtuelle Qubit und das zweite virtuelle Qubit nicht in der Lage sind, direkt miteinander zu interagieren,
Bestimmen einer Zustandstausch-Qubit-Kette gemäß den Topologieinformationen, wobei die Zustandstausch-Qubit-Kette konfiguriert ist für mindestens eines von: Tauschen von Zuständen zwischen dem ersten virtuellen Qubit und einem anderen Qubit, oder Tauschen von Zuständen zwischen dem zweiten virtuellen Qubit und einem anderen Qubit;
Bestimmen mindestens einer Tausch-Gattereinheit gemäß der Zustandstausch-Qubit-Kette; und
Kombinieren der mindestens einen Tausch-Gattereinheit und der ersten Gattereinheit, um eine äquivalente Gattereinheit zu erhalten, wobei die äquivalente Gattereinheit als die zweite Gattereinheit dient;
wobei die Tausch-Gattereinheit konfiguriert ist, Zustände zwischen zwei Qubits, die als Eingaben der Tausch-Gattereinheit dienen, zu tauschen, und die mindestens eine Tausch-Gattereinheit zeitlich vor der ersten Gattereinheit in der äquivalenten Gattereinheit operiert.

4. Verfahren nach Anspruch 3, wobei das Bestimmen der mindestens einen Tausch-Gattereinheit gemäß der Zustandstausch-Qubit-Kette umfasst:
Bestimmen, für jedes Paar benachbarter virtueller Qubits in der Zustandstausch-Qubit-Kette, einer jeweiligen Tausch-Gattereinheit zwischen den benachbarten virtuellen Qubits,
wobei die Zustandstausch-Qubit-Kette eine oder beide von einer ersten Zustandstausch-Qubit-Kette und einer zweiten Zustandstausch-Qubit-Kette umfasst, die erste Zustandstausch-Qubit-Kette mindestens ein virtuelles Qubit umfasst, das das erste virtuelle Qubit umfasst, die zweite Zustandstausch-Qubit-Kette mindestens ein virtuelles Qubit umfasst, das das zweite virtuelle Qubit umfasst, und ein virtuelles End-Qubit in der ersten Zustandstausch-Qubit-Kette und ein virtuelles End-Qubit in der zweiten Zustandstausch-Qubit-Kette in der Lage sind, direkt miteinander zu interagieren.

5. Verfahren nach Anspruch 3, wobei vor dem Bestimmen der Zustandstausch-Qubit-Kette gemäß den Topologieinformationen das Verfahren ferner umfasst:
Erhalten eines Äquivalenzindikators, wobei der Äquivalenzindikator konfiguriert ist anzugeben, ob mindestens eine unterschiedliche Gattereinheit zwischen der logischen Quantenschaltung und der virtuellen Quantenschaltung zulässig ist;
Bestimmen der Zustandstausch-Qubit-Kette gemäß den Topologieinformationen in Reaktion darauf, dass der Äquivalenzindikator angibt, dass die mindestens eine unterschiedliche Gattereinheit zwischen der logischen Quantenschaltung und der virtuellen Quantenschaltung zulässig ist; und
Ausgeben einer Fehlermeldung in Reaktion darauf, dass der Äquivalenzindikator angibt, dass die mindestens eine unterschiedliche Gattereinheit zwischen der logischen Quantenschaltung und der virtuellen Quantenschaltung nicht zulässig ist, wobei die Fehlermeldung konfiguriert ist anzuzeigen, dass die Ausführung der Quantenberechnungsaufgabe fehlschlägt.

6. Verfahren nach Anspruch 1, wobei das Bestimmen, gemäß den Topologieinformationen, der zweiten Gattereinheiten für erste Gattereinheiten, die sich jeweils in der logischen Quantenschaltung befinden, umfasst:
in Reaktion darauf, dass die erste Gattereinheit konfiguriert ist, die logische Operation an nur einem logischen Qubit durchzuführen,
Bestimmen der zweiten Gattereinheit als identisch mit der ersten Gattereinheit.

7. Verfahren nach einem der Ansprüche 1 bis 6, wobei das Erhalten (310) der logischen Quantenschaltung umfasst:
Erhalten eines Aufgabenindikators, der konfiguriert ist, die auszuführende Quantenberechnungsaufgabe anzugeben;
Bestimmen, für jeden in dem Aufgabenindikator enthaltenen Operationsindikator, einer jeweiligen ersten Gattereinheit und mindestens eines logischen Qubits, wobei die erste Gattereinheit konfiguriert ist, eine logische Operation an Zuständen des mindestens einen logischen Qubits durchzuführen; und
Verbinden der jeweiligen ersten Gattereinheiten aller Operationsindikatoren gemäß einer zeitlichen Reihenfolge der Operationsindikatoren, um die logische Quantenschaltung zu erzeugen, wobei die zeitliche Reihenfolge der Operationsindikatoren durch den Aufgabenindikator angegeben wird.

8. Verfahren nach einem der Ansprüche 1 bis 7, ferner umfassend:
Erhalten einer Anforderung zum Einrichten des virtuellen Quantenchips;
Bestimmen, in Reaktion auf die Anforderung, der Qubit-Abbildung und einer Topologieanforderung für den virtuellen Quantenchip, wobei die Topologieanforderung eine Anforderung an die Topologiebeziehung zwischen den virtuellen Qubits in dem virtuellen Quantenchip ist; und
Bestimmen, für den virtuellen Quantenchip, der Teilstruktur in dem physischen Quantenchip gemäß der Qubit-Abbildung und der Topologieanforderung.

9. Verfahren nach Anspruch 8, wobei das Bestimmen, für den virtuellen Quantenchip, der Teilstruktur in dem physischen Quantenchip gemäß der Qubit-Abbildung und der Topologieanforderung umfasst:
Bestimmen, aus dem physischen Quantenchip gemäß der Qubit-Abbildung, der physischen Qubits, die jeweils auf die virtuellen Qubits in dem virtuellen Quantenchip abgebildet sind;
Bestimmen, in Reaktion darauf, dass sich die bestimmten physischen Qubits alle in einem nicht belegten Zustand befinden, einer Topologiebeziehung zwischen den bestimmten physischen Qubits aus einer physischen Topologiebeziehung zwischen allen physischen Qubits des physischen Quantenchips; und
Bestimmen, in Reaktion darauf, dass die Topologiebeziehung zwischen den bestimmten physischen Qubits die Topologieanforderung erfüllt, eines Teils des physischen Quantenchips, der die bestimmten physischen Qubits umfasst, als die Teilstruktur.

10. Computervorrichtung, umfassend einen Prozessor und einen Speicher, wobei der Speicher ein Computerprogramm speichert und das Computerprogramm bei Laden und Ausführen durch den Prozessor das Verfahren nach einem der Ansprüche 1 bis 9 implementiert.

11. Computerlesbares Speichermedium, das ein Computerprogramm speichert, wobei das Computerprogramm bei Laden und Ausführen durch einen Prozessor das Verfahren nach einem der Ansprüche 1 bis 9 implementiert.

12. Computerprogrammprodukt, umfassend ein Computerprogramm, wobei das Computerprogramm in einem computerlesbaren Speichermedium gespeichert ist und ein Prozessor beim Lesen des Computerprogramms von dem computerlesbaren Speichermedium und Ausführen des Computerprogramms das Verfahren nach einem der Ansprüche 1 bis 9 implementiert.

## Revendications

1. Procédé d'exécution d'une tâche de calcul quantique, applicable à un dispositif informatique, le procédé comprenant :
l'obtention (310) d'un circuit quantique logique, dans lequel le circuit quantique logique est un circuit logique abstrait configuré pour exécuter la tâche de calcul quantique et comprenant des qubits logiques et des portes quantiques, et les portes quantiques sont configurées pour effectuer des opérations logiques respectives sur les qubits logiques ;
la sélection d'une puce quantique virtuelle pour la tâche de calcul quantique parmi une pluralité de puces quantiques virtuelles, dans lequel le circuit quantique logique est susceptible d'être mis en œuvre par une topologie de qubits virtuels dans la puce quantique virtuelle sélectionnée, chaque puce quantique virtuelle parmi la pluralité de puces quantiques virtuelles est mappée sur une structure partielle respective d'une puce quantique physique, les structures partielles respectives de la pluralité de puces quantiques virtuelles ne comportent pas de qubits se chevauchant dans la puce quantique physique ;
la génération (320) d'un circuit quantique virtuel pour la tâche de calcul quantique selon des informations de topologie de la puce quantique virtuelle et du circuit quantique logique, dans lequel les informations de topologie indiquent une relation de topologie entre tous les qubits virtuels dans la puce quantique virtuelle, et le circuit quantique virtuel est un circuit construit en utilisant au moins une partie des qubits virtuels ;
la génération (330) d'un circuit quantique physique pour la tâche de calcul quantique selon le circuit quantique virtuel et un mappage de qubits entre la puce quantique virtuelle et la puce quantique physique, dans lequel le mappage de qubits indique un qubit physique respectif, de la puce quantique physique, représenté par chacun des qubits virtuels ; et
l'exécution (340) de la tâche de calcul quantique au moyen du circuit quantique physique construit dans la structure partielle de la puce quantique physique pour obtenir un résultat d'exécution de la tâche de calcul quantique ;
dans lequel l'exécution (340) de la tâche de calcul quantique au moyen du circuit quantique physique construit dans la structure partielle de la puce quantique physique pour obtenir le résultat d'exécution de la tâche de calcul quantique comprend :
l'exécution d'une première tâche de calcul quantique au moyen d'une partie du circuit quantique physique construite dans une première structure partielle de la puce quantique physique pour obtenir un premier résultat d'exécution de la première tâche de calcul quantique ; et
l'exécution d'une deuxième tâche de calcul quantique au moyen d'une autre partie du circuit quantique physique construite dans une deuxième structure partielle de la puce quantique physique pour obtenir un deuxième résultat d'exécution de la deuxième tâche de calcul quantique ;
dans lequel la première tâche de calcul quantique et la deuxième tâche de calcul quantique sont des tâches différentes et sont exécutées de manière synchrone, et la première structure partielle et la deuxième structure partielle sont indépendantes l'une de l'autre dans la puce quantique physique ;
dans lequel la génération (320) du circuit quantique virtuel pour la tâche de calcul quantique selon les informations de topologie de la puce quantique virtuelle et du circuit quantique logique comprend :
la détermination, selon les informations de topologie, d'une deuxième unité de porte respective pour chaque première unité de porte dans le circuit quantique logique, dans lequel chaque première unité de porte est une porte quantique configurée pour effectuer une opération logique respective sur des états de qubits logiques dans le circuit quantique logique, et la deuxième unité de porte pour ladite première unité de porte est une porte quantique configurée pour effectuer la même opération logique sur des états des qubits virtuels ; et
la génération du circuit quantique virtuel pour la tâche de calcul quantique selon la deuxième unité de porte respective pour chaque première unité de porte et une séquence temporelle des premières unités de porte dans le circuit quantique logique ; et
dans lequel la génération (330) du circuit quantique physique pour la tâche de calcul quantique selon le circuit quantique virtuel et le mappage de qubits entre la puce quantique virtuelle et la puce quantique physique comprend :
la détermination, selon le mappage de qubits, du qubit physique respectif d'au moins un qubit virtuel dans la puce quantique virtuelle ; et
le remplacement de chaque qubit virtuel dans le circuit quantique virtuel par le qubit physique respectif dudit qubit virtuel pour obtenir le circuit quantique physique.

2. Procédé selon la revendication 1, dans lequel la détermination, selon les informations de topologie, d'une deuxième unité de porte respective pour chaque première unité de porte dans le circuit quantique logique comprend :
en réponse à une première unité de porte étant configurée pour effectuer l'opération logique sur un premier qubit logique et un deuxième qubit logique,
la détermination, à partir des informations de topologie, d'une première information indiquant une connectivité entre un premier qubit virtuel et un deuxième qubit virtuel, dans lequel le premier qubit virtuel est un homologue du premier qubit logique dans la puce quantique virtuelle, et le deuxième qubit virtuel est un homologue du deuxième qubit logique dans la puce quantique virtuelle ; et
la détermination de la deuxième unité de porte respective de la première unité de porte selon la première information.

3. Procédé selon la revendication 2, dans lequel la détermination de la deuxième unité de porte respective de la première unité de porte selon la première information comprend :
la détermination de la deuxième unité de porte comme étant identique à la première unité de porte en réponse à la première information indiquant que le premier qubit virtuel et le deuxième qubit virtuel sont capables d'interagir l'un avec l'autre directement ; et
en réponse à la première information indiquant que le premier qubit virtuel et le deuxième qubit virtuel ne sont pas capables d'interagir l'un avec l'autre directement,
la détermination d'une chaîne de qubits d'échange d'états selon les informations de topologie, dans lequel la chaîne de qubits d'échange d'états est configurée pour au moins l'un parmi : l'échange d'états entre le premier qubit virtuel et un autre qubit, ou l'échange d'états entre le deuxième qubit virtuel et un autre qubit ;
la détermination d'au moins une unité de porte d'échange selon la chaîne de qubits d'échange d'états ; et
la combinaison de l'au moins une unité de porte d'échange et de la première unité de porte pour obtenir une unité de porte équivalente, dans lequel l'unité de porte équivalente sert de deuxième unité de porte ;
dans lequel l'unité de porte d'échange est configurée pour échanger des états entre deux qubits servant d'entrées de l'unité de porte d'échange, et l'au moins une unité de porte d'échange opère temporellement avant la première unité de porte dans l'unité de porte équivalente.

4. Procédé selon la revendication 3, dans lequel la détermination de l'au moins une unité de porte d'échange selon la chaîne de qubits d'échange d'états comprend :
la détermination, pour chaque paire de qubits virtuels adjacents dans la chaîne de qubits d'échange d'états, d'une unité de porte d'échange respective entre les qubits virtuels adjacents,
dans lequel la chaîne de qubits d'échange d'états comprend l'une ou les deux parmi une première chaîne de qubits d'échange d'états et une deuxième chaîne de qubits d'échange d'états, la première chaîne de qubits d'échange d'états comprend au moins un qubit virtuel comprenant le premier qubit virtuel, la deuxième chaîne de qubits d'échange d'états comprend au moins un qubit virtuel comprenant le deuxième qubit virtuel, et un qubit virtuel de queue dans la première chaîne de qubits d'échange d'états et un qubit virtuel de queue dans la deuxième chaîne de qubits d'échange d'états sont capables d'interagir l'un avec l'autre directement.

5. Procédé selon la revendication 3, dans lequel, avant la détermination de la chaîne de qubits d'échange d'états selon les informations de topologie, le procédé comprend en outre :
l'obtention d'un indicateur d'équivalence, dans lequel l'indicateur d'équivalence est configuré pour indiquer si au moins une unité de porte différente est autorisée entre le circuit quantique logique et le circuit quantique virtuel ;
la détermination de la chaîne de qubits d'échange d'états selon les informations de topologie en réponse à l'indicateur d'équivalence indiquant que l'au moins une unité de porte différente est autorisée entre le circuit quantique logique et le circuit quantique virtuel ; et
la présentation d'un message d'erreur en réponse à l'indicateur d'équivalence indiquant que l'au moins une unité de porte différente n'est pas autorisée entre le circuit quantique logique et le circuit quantique virtuel, dans lequel le message d'erreur est configuré pour indiquer que l'exécution de la tâche de calcul quantique échoue.

6. Procédé selon la revendication 1, dans lequel la détermination, selon les informations de topologie, des deuxièmes unités de porte pour des premières unités de porte, respectivement, qui se trouvent dans le circuit quantique logique comprend :
en réponse à la première unité de porte étant configurée pour effectuer l'opération logique sur un seul qubit logique,
la détermination de la deuxième unité de porte comme étant identique à la première unité de porte.

7. Procédé selon l'une quelconque des revendications 1 à 6, dans lequel l'obtention (310) du circuit quantique logique comprend :
l'obtention d'un indicateur de tâche configuré pour indiquer la tâche de calcul quantique à exécuter ;
la détermination, pour chaque indicateur d'opération compris dans l'indicateur de tâche, d'une première unité de porte respective et d'au moins un qubit logique, dans lequel la première unité de porte est configurée pour effectuer une opération logique sur des états de l'au moins un qubit logique ; et
la connexion des premières unités de porte respectives de tous les indicateurs d'opération selon une séquence temporelle des indicateurs d'opération pour générer le circuit quantique logique, dans lequel la séquence temporelle des indicateurs d'opération est indiquée par l'indicateur de tâche.

8. Procédé selon l'une quelconque des revendications 1 à 7, comprenant en outre :
l'obtention d'une requête pour l'établissement de la puce quantique virtuelle ;
la détermination, en réponse à la requête, du mappage de qubits et d'une exigence de topologie pour la puce quantique virtuelle, dans lequel l'exigence de topologie est une exigence portant sur la relation de topologie entre les qubits virtuels dans la puce quantique virtuelle ; et
la détermination, pour la puce quantique virtuelle, de la structure partielle dans la puce quantique physique selon le mappage de qubits et l'exigence de topologie.

9. Procédé selon la revendication 8, dans lequel la détermination, pour la puce quantique virtuelle, de la structure partielle dans la puce quantique physique selon le mappage de qubits et l'exigence de topologie comprend :
la détermination, à partir de la puce quantique physique selon le mappage de qubits, des qubits physiques mappés sur les qubits virtuels, respectivement, dans la puce quantique virtuelle ;
la détermination, en réponse aux qubits physiques déterminés étant tous dans un état non occupé, d'une relation de topologie entre les qubits physiques déterminés à partir d'une relation de topologie physique entre tous les qubits physiques de la puce quantique physique ; et
la détermination, en réponse à la relation de topologie entre les qubits physiques déterminés satisfaisant l'exigence de topologie, d'une partie de la puce quantique physique comprenant les qubits physiques déterminés pour servir de structure partielle.

10. Dispositif informatique, comprenant un processeur et une mémoire, dans lequel la mémoire stocke un programme informatique, et le programme informatique, lorsqu'il est chargé et exécuté par le processeur, met en œuvre le procédé selon l'une quelconque des revendications 1 à 9.

11. Support de stockage lisible par ordinateur, stockant un programme informatique, dans lequel le programme informatique, lorsqu'il est chargé et exécuté par un processeur, met en œuvre le procédé selon l'une quelconque des revendications 1 à 9.

12. Produit-programme d'ordinateur, comprenant un programme informatique, dans lequel le programme informatique est stocké dans un support de stockage lisible par ordinateur, et un processeur, lors de la lecture du programme informatique à partir du support de stockage lisible par ordinateur et de l'exécution du programme informatique, met en œuvre le procédé selon l'une quelconque des revendications 1 à 9.
